# EUROPEAN PATENT SPECIFICATION

(11) **EP 3 791 677 B1**
(45) Date of publication and mention of the grant of the patent: **02.04.2025**
(21) Application number: 19733119.2
(22) Date of filing: 09.05.2019
(51) Int. Cl.: H04W 76/11, H04W 12/08, H04W 76/10

(54) **MANAGING EXTENDED 5G-S-TMSI IN LTE CONNECTED TO 5GC**
VERWALTUNG VON ERWEITERTER 5G-S-TMSI IN LTE VERBUNDEN MIT 5GC
GESTION DE 5G-S-TMSI ÉTENDU EN LTE CONNECTÉ À 5GC

(30) Priority: 10.05.2018 US 201862669790 P
(43) Date of publication of application: 17.03.2021
(73) Proprietor: TELEFONAKTIEBOLAGET LM ERICSSON (PUBL), 164 83 Stockholm (SE)
(72) Inventor: LINDHEIMER, Christofer, 592 31 Vadstena (SE); MILDH, Gunnar, 192 55 Sollentuna (SE); ARSHAD, Malik Wahaj, 194 31 Upplands Väsby (SE); DA SILVA, Icaro L. J., 170 77 Solna (SE); SUSITAIVAL, Riikka, 00100 Helsinki (FI)
(74) Representative: Ericsson
(86) International application number: PCT/IB2019/053842
(87) International publication number: WO 2019/215673

(56) References cited:
- ZTE ET AL: "Consideration on extending the code space for 5G-S-TMSI", vol. RAN WG2, no. Sanya, China; 20180416 - 20180420, 5 April 2018 (2018-04-05), XP051415140, Retrieved from the Internet <URL:http://www.3gpp.org/ftp/tsg%5Fran/WG2%5FRL2/TSGR2%5F101bis/Docs/> [retrieved on 20180405]
- ERICSSON: "Offline discussion report on [101#10][LTE/5GC] 5G-S-TMSI size in LTE connected to 5GC", vol. RAN WG2, no. Sanya, China; 20180416 - 20180420, 20 April 2018 (2018-04-20), XP051435954, Retrieved from the Internet <URL:http://www.3gpp.org/ftp/tsg%5Fran/WG2%5FRL2/TSGR2%5F101bis/Docs/> [retrieved on 20180420]
- ERICSSON: "Message 3.5 in LTE connected to 5GC", vol. RAN WG2, no. Sanya, P.R. of China; 20180416 - 20180420, 6 April 2018 (2018-04-06), XP051415684, Retrieved from the Internet <URL:http://www.3gpp.org/ftp/tsg%5Fran/WG2%5FRL2/TSGR2%5F101bis/Docs/> [retrieved on 20180406]

## Description

### CROSS-REFERENCE TO RELATED APPLICATIONS

This application claims the benefit of U.S. Provisional Application No. 62/669,790, filed May 10, 2018.

### TECHNICAL FIELD

The present disclosure generally relates to the field of communications, and more particularly, to wireless communications methods, devices, and networks.

### BACKGROUND

"Consideration on extending the code space for 5G-S-TMSI" relates to mechanisms to transmit the 48-bit 5G-S-TMSI under the size limitation of MSG3.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

In the new third generation partnership project (3GPP) standard 5GS, the system and architecture for 5G and various state machines are described.

One "state machine" is the connection management state model or CM-state model, described in 3GPP technical specification (TS) 23.501.

Generally, connection management comprises functions for establishing and releasing signaling connections between a user equipment (UE) and core network node, for 5G this node is called AMF (Access and Mobility Management Function).

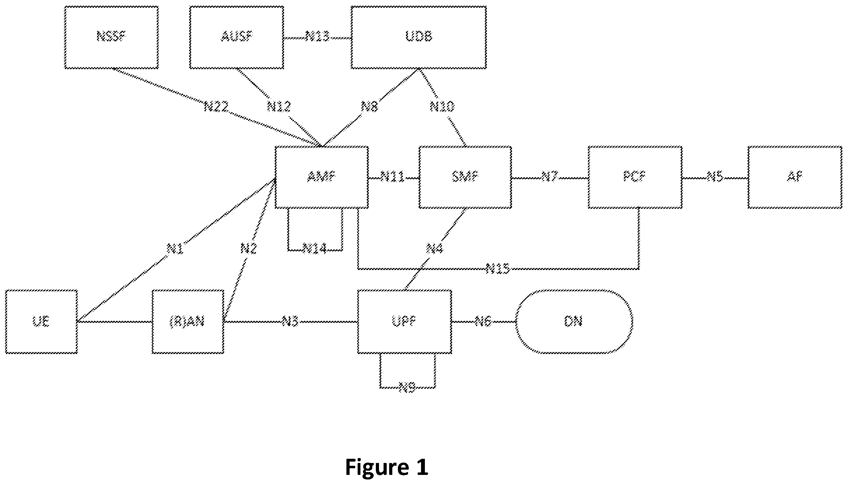

Figure 1 illustrates an example of a 5G system architecture, including Nodes (e.g., AMF, UE, (R)AN) and interface names. Connection management is about signaling connection over the N1 interface as illustrated in Figure 1.

This signaling connection over N1 is used to enable Non-Access-Stratum (NAS) signaling exchange between the UE and the core network. It comprises both the AN signaling connection between the UE and the AN (Access Node) and the N2 connection, between the AN and the AMF.

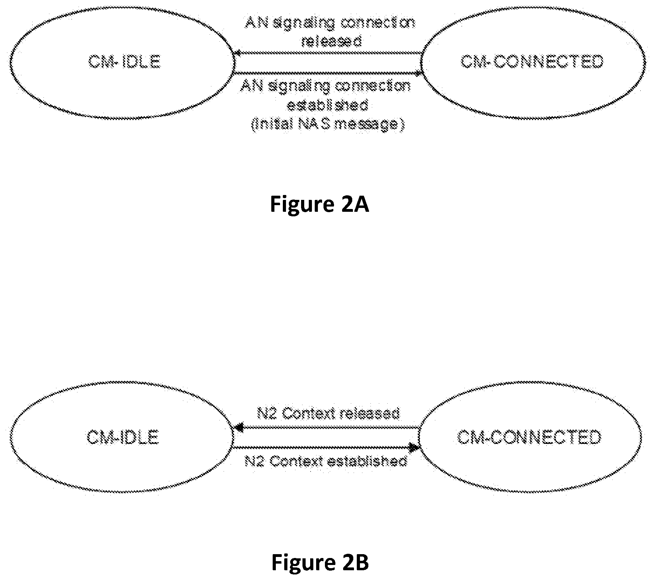

Referring also to Figures 2A and 2B, Figure 2A is a diagram illustrating CM state transition in the UE and Figure 2B is a diagram illustrating CM state transition in the AMF. There are two CM-states defined, CM-IDLE and CM-CONNECTED.

A UE in CM-IDLE has no NAS signaling connection established over N1 to the AMF and in this CM-state, the UE performs cell selection/reselection and public land mobile network (PLMN) selection. In addition, there is no AN signaling connection or N2/N3 connections for a UE in idle state.

If the UE is registered to the network and in CM-IDLE, it shall usually listen to and respond to paging messages from the network. This means that in CM-IDLE the UE is still reachable. If initiated by the user/UE, the UE shall also be able to perform a service request procedure.

A UE in CM-CONNECTED is a UE that has established an access node (AN) signaling connection between the UE and the AN, the UE has entered an RRC_CONNECTED state over 3GPP access. Over this connection, the UE can transmit an initial NAS message (for example a service request) and this message initiates the transition from CM-IDLE to CM CONNECTED in the AMF. As shown in Figure 1, CM-CONNECTED may require an N2 connection between the access node (AN) and the AMF. The reception of an initial N2 message (e.g., N2 Initial UE message) initiates the transition for AMF from CM-IDLE to CM-CONNECTED state.

In the CM-CONNECTED state, the UE can transmit data, and the UE shall be ready to enter CM-IDLE, whenever AN signalling connection is released. The AMF enters CM-IDLE whenever the logical N1 signalling connection and the N3 user plane connection are released.

In a similar way as in the AMF, there is also a state model in the AN, the access network.

Certain embodiments in this disclosure use a "gNB" to refer to the access network node. The term "gNB" shall be considered an example of a type of access network node, rather than a limitation in the applicability of the present disclosure. In other embodiments, other types of access network nodes could be used, such as an ng-eNB or an eNB.

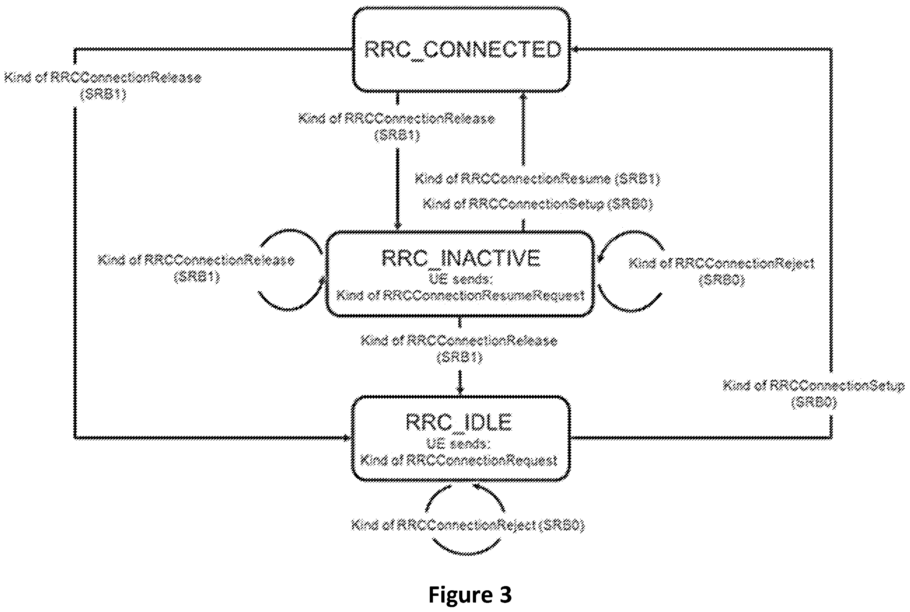

One state model in the gNB is the RRC State machine. Figure 3 is an illustration of operation of an RRC state machine. A UE can either be in RRC_CONNECTED, RRC_INACTIVE or RRC_IDLE. Figure 3 is an illustration of how the RRC State machine is intended to work and the messages used to trigger/transition a UE between the states. The indications in parenthesis (SRB0, SRB1) indicate what signalling radio bearer can be used to transition the UE between the states. Figure 3 also shows the principles for transition, not necessarily all the messages will have the same names in the final standard. The mapping between the different state machines, the one in the AN and the one in AMF, is such that CM-CONNECTED can map to either RRC_CONNECTED or RRC_INACTIVE - while CM-IDLE always map to RRC_IDLE.

A UE is either in RRC_CONNECTED state or in RRC_INACTIVE state when an RRC connection has been established. If this is not the case, i.e., no RRC connection is established, the UE is in RRC_IDLE state. These different states are further described in 3GPP TS 38.331

In RRC_IDLE, the UE is configured to listen to a paging channel at certain occasions and it performs cell (re)selection procedures and listens to system information.

In RRC_INACTIVE, the UE is also listening to the paging channel and does cell (re)selection procedures, but in addition, the UE also maintains a configuration and the configuration is also kept on the network side, such that, when needed, e.g., when data arrives to the UE, the UE doesn't require a complete setup procedure to start transmitting data.

In RRC_CONNECTED, there is transfer of data to or from the UE and the network controls the mobility. This means that the network controls when the UE should *handover* to other cells. In the connected state, the UE still monitors the paging channel and the UE monitors control channels that are associated with whether there is data for the UE or not. The UE provides channel quality and feedback information to the network and the UE performs neighboring cell measurement and reports these measurements to the network.

When a UE is in CM-CONNECTED and RRC_INACTIVE the following applies:
- UE reachability is managed by the RAN, with assistance information from core network;
- UE paging is managed by the RAN.
- UE monitors for paging with UE's CN (5G S-TMSI) and a RAN identifier (I-RNTI)

The AMF, based on network configuration, may provide assistance information to the next generation radio access network (NG-RAN), to assist the NG-RAN's decision whether the UE can be sent to RRC Inactive state.

The "RRC Inactive assistance information" can for example include:
- UE specific discontinuous receive (DRX) values.
- the Registration Area provided to the UE, sometimes referred to as TAI-list (TrackingArealdentifier List) below;
- Periodic Registration Update timer
- If the AMF has enabled mobile initiated connection only (MICO) mode for the UE, an indication that the UE is in MICO mode.
- Information from the UE permanent identifier, as defined in TS 38.304 [50], that allows the RAN to calculate the UE's RAN paging occasions.

The RRC Inactive assistance information mentioned above is provided by the AMF during N2 activation with the (new) serving NG-RAN node (i.e., during Registration, Service Request, or handover) to assist the NG RAN's decision whether the UE can be sent to RRC Inactive state. RRC Inactive state is part of the RRC state machine, and it is up to the RAN to determine the conditions to enter RRC Inactive state. If any of the parameters included in the RRC Inactive Assistance Information changes as the result of NAS procedure, the AMF shall update the RRC Inactive Assistance Information to the NG-RAN node.

The state of the N2 and N3 reference points are not changed by the UE entering CM-CONNECTED with RRC Inactive state. A UE in RRC inactive state is aware of the RAN Notification area (RNA).

A UE in the RRC_INACTIVE state can be configured with an RNA (RAN-based Notification Area), where:
- the RNA can cover a single or multiple cells, and can be smaller than CN Registration area;
- a RAN-based notification area update (RNAU) is periodically sent by the UE and is also sent when the cell reselection procedure of the UE selects a cell that does not belong to the configured RNA.

There are several different alternatives on how the RNA can be configured:
- List of cells:
   o A UE is provided an explicit list of cells (one or more) that constitute the RNA.
- List of RAN areas:
   ∘ A UE is provided (at least one) RAN area ID, where a RAN area is a subset of a CN Tracking Area;
   ∘ A cell broadcasts (at least one) RAN area ID in the system information so that a UE knows which area the cell belongs to.
- List of TAI (Tracking Area Identifiers). In CM-IDLE, it is the core network that is in charge of UE reachability and the core network does this through configuring a CN registration area that is defined by a set of Tracking Areas (TA)'s. The UE is configured with the CN registration area through a list of Tracking Area Identifiers, TAI's, and this CN Registration area is referred to as "TAI-list".

At transition into CM-CONNECTED with RRC Inactive state, the NG-RAN configures the UE with a periodic RAN Notification Area Update timer taking into account the value of the Periodic Registration Update timer value indicated in the RRC Inactive Assistance Information and uses a guard timer with a value longer than the RAN Notification Area Update timer value provided to the UE.

If the periodic RAN Notification Area Update guard timer expires in RAN, the RAN can initiate AN Release procedure as specified in TS 23.502 [3].

When the UE is in CM-CONNECTED with RRC inactive state, the UE performs PLMN selection procedures as defined in TS 23.122 [17] for CM-IDLE.

When the UE is CM-CONNECTED with RRC Inactive state, the UE may resume the RRC connection due to:
- Uplink data pending;
- Mobile initiated NAS signaling procedure;
- As a response to RAN paging;
- Notifying the network that it has left the RAN Notification area;
- Upon periodic RAN update timer expiration.

When Resuming, UE will include an identifier to the network that will inform the network node about where the UE context describing the specifics of the UE, e.g., bearers, tracking area, slices, security credentials/keys etc.) such that resuming will bring the UE to an RRC_CONNECTED configuration similar to when it was resumed. The Identifier pointing to the UE Context is called I-RNTI, Inactive Radio Network Temporary Identifier. In connection to when the UE is suspended, i.e., the UE is transitioned from RRC_CONNECTED to RRC_INACTIVE, the UE is provided with an I-RNTI from the network. The network allocates an I-RNTI when transitioning UE to RRC_INACTIVE and the I-RNTI is used to identify the UE context, i.e., as an identifier of the details stored about the UE in the network while in RRC_INACTIVE.

Now, while the above has mainly been a description about NR, the new radio connected to a 5G core network, or 5G system, it is equally applicable to situations when LTE connects to a 5G system. There is thus also a possibility to run LTE radio in the radio network but connecting to a system that is not an evolved packet core (EPC) system, but that includes the architecture according to above, e.g., with N2 interfaces towards AMF's.

In such situations, there will also be an RRC_INACTIVE defined, with the same specifics as is described above for NR.

Looking now more in detail on the RRC Request or RRC Connection Request procedure. In LTE it is called RRC Connection Request. In NR it is called RRC Request. These terms may be used interchangeably and specify what access is being requested. If not specified, it will be as defined above. As is indicated by the RRC state diagram in Figure 3, this procedure occurs when the UE is in RRC_IDLE.

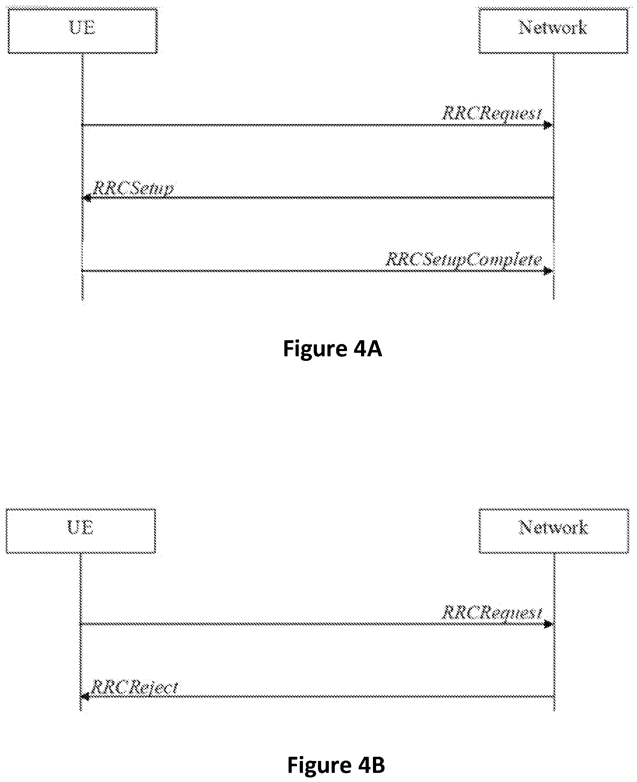

In RRC_IDLE before the UE has registered with a core network, the UE needs to send an RRC request to request a signaling connection as illustrated in Figures 4A and 4B. Typically, the request to the network can be either accepted or the request can be rejected, as illustrated in Figures 4A and 4B:
Figure 4A illustrates a successful procedure. The first message in Figure 4A, the RRCRequest message is commonly also referred to as msg3 (short for message 3) as it is the 3^{rd} message in order (there are 2 messages not carrying any RRC, for requesting resources (msg1) to send msg3 and for receiving grants (msg2) for such resources). To continue, RRC setup is commonly referred to as msg4 and RRC Setup complete as msg5. It should be noted though that msg3 - 5 are also used as denoting interactions between UE and Network also in other procedures, e.g., resume procedures. Thus, msg3 and msg4-msg5 are more generic terms that simply refer to messages in a particular order.

The purpose of this example procedure is to establish an RRC connection. RRC connection establishment involves SRB1 (Signaling Radio Bearer 1) establishment. The procedure is also used to transfer the initial NAS dedicated information/ message from the UE to the network.

The network applies the procedure as follows:
- When establishing an RRC connection:
   - to establish SRB1;
- When the UE is resuming and the network is not able to retrieve or verify the UE context. This is then initiated by an RRC Resume Request rather than an RRC (Connection) Request (or RRCRequest short)

The UE initiates the procedure when upper layers request establishment of an RRC connection while the UE is in RRC_IDLE.

Upon initiation of the procedure, the UE shall, among other things, start a timer and initiate transmission of the RRCRequest message.

The UE shall set the content of the RRC message as follows:
1> set the *ue-Identity* as follows:
   2>if upper layers provide a Fifth Generation System Temporary Mobile Subscriber Identity (5G-S-TMSI):
      3> set the *ue-Identity* to the value received from upper layers;
   2>else:
      3> draw a random value of a certain range.
      It is the upper layers that provide the 5G-S-TMSI if the UE is registered in the tracking area of the current cell.
1> set the *establishmentCause* in accordance with the information received from upper layers;

The UE shall submit the *RRCRequest* message to lower layers for transmission.

There are of course other aspects than identifiers to consider also, but for purposes of this disclosure, some steps are omitted.

If successfully received and accepted by the network node, the UE will receive an RRC Setup message, (msg4). In response to the setup message, it shall send msg5, the complete message. In this message UE may include NAS messages to the network.

The format and content of the RRC Request message is similar in both LTE and NR.

Now, the message size of the RRCRequest message is limited both in NR and in LTE. In particular, in LTE, it is not possible to fit in more information than what is already specified and thus, any change to format may not be possible. Accordingly, any addition proposals that change the amount of information in the RRCRequest to require more bits presents difficulties. This may pose a particular problem when LTE is connected to 5GC, as this combination may be constrained by both the LTE air interface, and the need to add new information for NR. The RRC Request message in NR is new and does not suffer from the constraints that LTE does.

One particular aspect that is being raised is an extension of the 5G-S-TMSI code length that is being allocated by the network upper layers (Non-access Stratum) to the UE once registered.

In LTE earlier releases, when LTE only connected to EPC, the ID was instead an S-TMSI that was 40 bits in length and this was included in RRC Connection Request messages after a UE was registered.

Now, with LTE having this 40 bit constraint, any longer Identifier fields will be difficult to include in the request message.

It is also possible that NR may have limitations in their space of identifiers in the corresponding msg3. It is not yet concluded that it will be possible to include longer identifiers in NR either, in which case, the challenge with a longer 5G-S-TMSI is also applicable for NR.

It thus becomes a problem if the 5G-S-TMSI, which will need to be included in the RRC Connection Request procedure in LTE when connected to 5GC, will be extended to, e.g., 48 bits for example.

There currently exist certain challenge(s). As described above, there is a problem with using extended lengths on identifier 5G-S-TMSI, in particular, when it is going to be mapped to the bit-constrained msg3 / RRC connection request message in LTE. In LTE, the identifier included is 40 bits and anything longer than this will not fit into the message 3 that includes the RRCConnection Request.

### SUMMARY

Certain aspects of the present disclosure and their embodiments may provide solutions to these or other challenges. Certain embodiments provide solutions for signalling of an extended 5G-S-TMSI that is longer than 40 bits.

Aspects of the invention are set out in the independent claims appended hereto. Optional features are set out in the dependent claims.

### BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:
Figure 1 is a block diagram illustrating an example of a 5G system architecture;
Figure 2A is a diagram illustrating CM state transition in the UE;
Figure 2B is a diagram illustrating CM state transition in the AMF;
Figure 3 is an illustration of operation of an RRC state machine and the messages used to trigger/transition a UE between the states;
Figure 4A is an illustration of an RRC request procedure from a UE to a network where the procedure is successful;
Figure 4B is an illustration of an RRC request procedure from a UE to a network where the procedure is unsuccessful;
Figure 5 is an example of a 5G-enabled wireless network according to some embodiments of inventive concepts;
Figure 6 is a flow chart of an example of a method for transmitting an identifier of a wireless device or UE according to some embodiments of inventive concepts;
Figure 7 is a flow chart of an example of another method for transmitting an identifier of a wireless device or UE according to some embodiments of the inventive concepts;
Figure 8 is a flow chart of an example of a further method for transmitting an identifier of a wireless device or UE according to some embodiments of the inventive concepts;
Figure 9 is a table illustrating a comparison of Global Unique Temporary Identifier (GUTI) lengths for Access Mobility Management Function (AMF) and Mobile Management Entity (MME);
Figure 10 is a bock diagram illustrating a wireless network including wireless devices (also referred to as UEs) according to some embodiments of the inventive concepts.
Figure 11 is a block diagram illustrating elements of a UE according to some embodiments of inventive concepts;
Figure 12 is a block diagram illustrating a virtualization environment according to some embodiments of inventive concepts;
Figure 13 is a schematic diagram illustrating a telecommunication network connected via an intermediate network to a host computer according to some embodiments of inventive concepts;
Figure 14 is a schematic diagram illustrating a host computer communicating via a base station with a user equipment over a partially wireless connection according to some embodiments of inventive concepts;
Figure 15 is a flow chart illustrating methods implemented in a communication system including a host computer, a base station and a user equipment according to some embodiments of inventive concepts;
Figure 16 is a flow chart illustrating methods implemented in a communication system including a host computer, a base station and a user equipment according to some embodiments of inventive concepts;
Figure 17 is a flow chart illustrating methods implemented in a communication system including a host computer, a base station and a user equipment according to some embodiments of inventive concepts;
Figure 18 is a flow chart illustrating methods implemented in a communication system including a host computer, a base station and a user equipment according to some embodiments of inventive concepts;
Figure 19 is a flow chart illustrating operations of a UE according to some embodiments of inventive concepts; and
Figure 20 is an example of a virtualization apparatus according to some embodiments of inventive concepts.

### DETAILED DESCRIPTION

There are, proposed herein, various embodiments which address one or more of the issues disclosed herein. As one example, in certain embodiments, only part of the 5G-S-TMSI is included in msg3 (instead of including the 5G-S-TMSI identifier in full in msg3). The rest of the 5G-S-TMSI identifier, for which there may be no room in msg3, is instead included in a second message or in msg5.

The identifier allocated by upper layers, although important for upper layers, is not used in any communication towards upper layers until after reception of message 5. Translating this to an RRC Request procedure where the 5G-S-TMSI is used, the actual identifier is not needed towards upper layers until after reception of RRCRequest Complete message and thus, what parts are not fitting in msg3 are included in message 5.

According to another embodiment of the present disclosure, the complete 5G-S-TMSI is included in message 5 instead of in message 3. In such situations, it is necessary to include another identifier in message 3 for purposes of returning an identifier in message 4 to make sure handshake is done with the correct UE. This other identifier is, prior to registration and reception of a 5G-S-TMSI, specified to be a random value. One aspect of the present disclosure is thus to use the random value approach not only when the UE is not registered and has not received a 5G-S-TMSI, but also in situations when it actually has received a 5G-S-TMSI.

According to the embodiments of the present disclosure, even a bit-constrained message 3 like the RRC Connection Request message in LTE, can manage a large upper layer identifier.

According to another aspect of the present disclosure, the split of 5G-S-TMSI is done in a way such that a specific part of the 5G-S-TMSI is signaled in msg3 and another specific part in msg5, or a message that is sent after msg3.

The specific part that is signaled after message 3 is corresponding to parts of an AMF identity.

In connection to this aspect of the present disclosure, the part of the 5G-S-TMSI that is signaled in message 3 is combined with a random number sequence.

In connection to another aspect of the present disclosure, the part of the 5G-S-TMSI that is signaled in msg3 is a combination of AMF pointers and a portion of 5G-TMSI.

Certain embodiments may provide one or more of the following technical advantage(s). Advantages of the disclosure is that both NR and LTE connected to 5GS and a 5G core network can manage a longer 5G-S-TMSI, for example 48 bits.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art. Additional information may also be found in the document(s) provided in the Appendix.

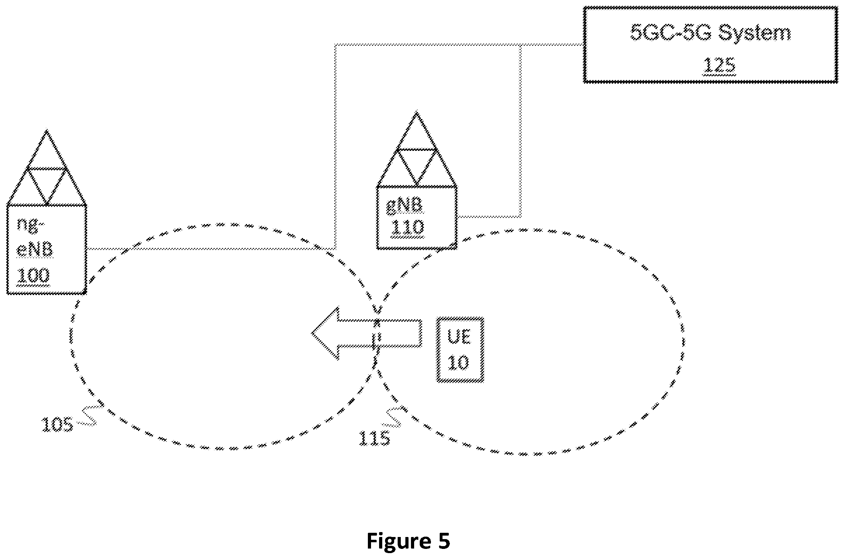

Figure 5 illustrates two different cells 105, 115, served by nodes 100 and 110 respectively. They are both connected to a 5G System 125. Node 100 is an ng-eNB offering access through LTE air interface and Node 110 is a gNB offering access through NR air interface. The radio spectrum used in cell 105 and 115 can be the same or different. Further, the spectrum bands may be the same or different. For example, cell 105 may utilize bands in the 2GHz spectrum regime whereas cell 115 may offer access through spectrum in other bands, like the 3.5, 5, 6, 28 or 60 GHz band.

A wireless device (UE 10) is shown in Figure 5 as moving from cell 115 to cell 105. Dependent on what state the UE is in, different things will happen when the UE enters cell 105. The present disclosure discusses states when the UE is allocated a 5G-S-TMSI.

When a UE has performed an initial RRCConnectionRequest successfully and managed to register with the 5G System, whether it is through accessing via a gNB (NR) or accessing via an ng-eNB (LTE) it will be allocated a 5G-S-TMSI.

The intention is that this 5G-S-TMSI will be used to identify a UE when communicating with the network.

In one embodiment of the present invention, accessing through an ng-eNB only allows a 40 bit identifier. If the 5G-S-TMSI allocated to the UE is larger than 40 bits, the UE will do the following:
In relation to preparing the RRC Connection Request message to be sent from the UE to the ng-eNB, the UE will include parts of the 5G-S-TMSI. In one example, it will include 40 bits, the same as the limit of the identifier. The exact bits to include may be either agreed between the UE and the network node, or it may be standardized that if splitting a 5G-S-TMSI a certain method should be used, e.g., the most significant bits or the least significant bits may be selected to be included in msg3.

Further, the UE will include the remaining bits in subsequent message 5 that is transmitted from the UE to the network after reception of a setup message in message 4.

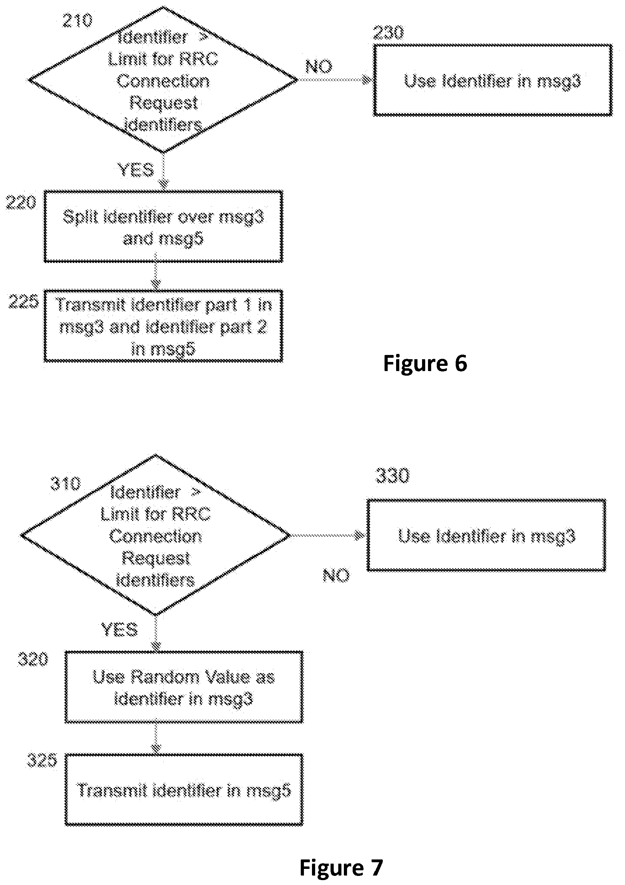

Figure 6 illustrates the procedure on the UE side. In step 210 there is a check in the UE prior to sending an RRCConnectionRequest message, e.g., in LTE connected to 5GC. If the identifier associated with the wireless device (in our case the 5G-S-TMSI) is larger than the limit in step 210, then there should be a split (220) otherwise the identifier should be used in full (230). In the next step 225, UE transmits two parts, one part (part 1) in msg3 and one part (part 2) in msg5.

In case the identifier associated with the wireless device is a split identifier there may also be inserted an indication about this in msg5 (if there are options).

Alternatively, it may be that the request message includes an indication that the identifier is a split identifier.

On the network node, the 5G-S-TMSI will be re-assembled and used/ included in communication towards the network 125 to identify communication from the particular UE.

According to another aspect of the present invention, and as illustrated in Figure 7, the UE may instead select to include the complete identifier received from upper layers, by the network in message 5 when performing the procedure of RRC Connection Request- Setup and Complete.

According to another aspect of the present disclosure, it is not necessarily the case that there is a need to wait until msg5 when there is a shortage of space in msg3. It may be equally possible to include an additional message, called msg3.5, to use only for when there is not enough room in msg3 to fit the necessary bits. This is illustrated as an alternative embodiment of the present disclosure.

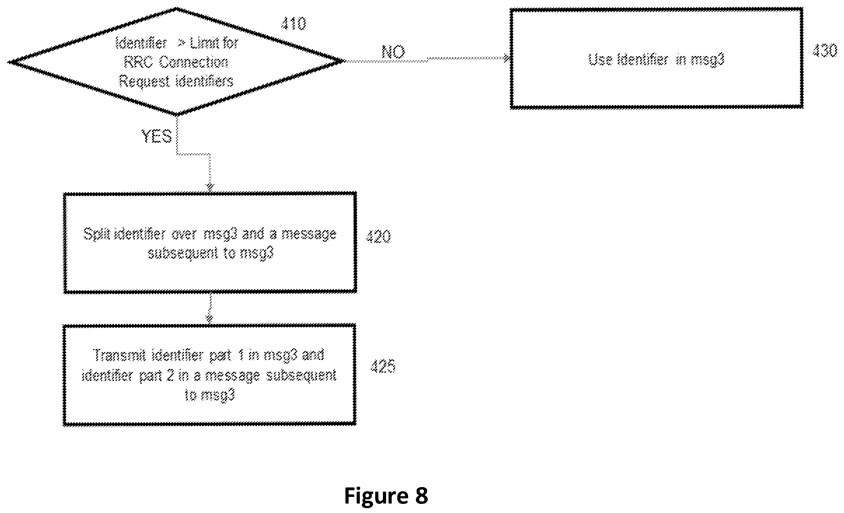

Figure 8 illustrates the embodiment according to the present disclosure, where the second part of the identifier associated with the wireless device or UE is sent in a message subsequent to msg3.

According to another aspect of the present disclosure, the split into part 1 and part 2 of the identifier associated with the wireless device or UE (5G-S-TMSI) follow a specific procedure.

The 5G-S-TMSI is built up from a set of other identifiers, according to:
<5G-S-TMSI> := <AMF Set ID> <AMF Pointer> <5G-TMSI>

The lengths of the different identifiers are:

| | |
|---|---|
| AMF Set ID | -12 bits |
| AMF Pointer | -4 bits |
| 5G-TMSI | -32 bits |

The important aspect of including an identifier at all in msg3 in the setup request, when there is no AS context that needs to be retrieved, is mainly to avoid collision, i.e., it is for purposes of contention resolution. As described above, it can either be a random value or a part of the 5G-S-TMSI.

Since splitting the 5G-S-TMSI is considered, from a contention resolution perspective, according to another embodiment of the present disclosure, we propose to maintain a 40-bit field in msg3. This would then mean that we don't have to change anything with respect to the MAC CE for contention resolution, since this is already calculated based on a 40-bit identifier.

The next question to address is *what* 40 bits should be included in part 1 in msg3, and what bits should be left to msg5, or a message that comes after msg3, e.g., msg3.5.

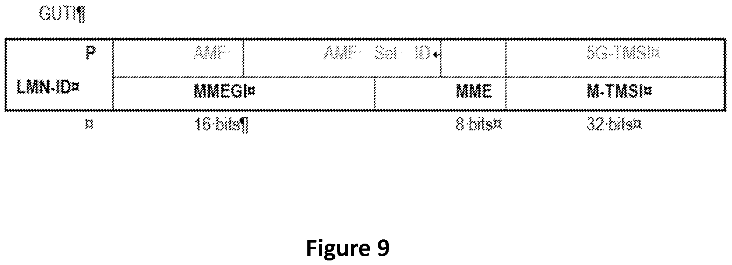

Figure 9 is a table illustrating a comparison of Global Unique Temporary Identifier (GUTI) lengths for Access Mobility Management Function (AMF) and Mobile Management Entity (MME). In Figure 9, the 5G-TMSI and the M-TMSI are of equal length and allocated by AMF/MME. In addition to the 5G-TMSI and the M-TMSI, there is the MME Code and the AMF pointer and possibly part of AMF set ID.

The MME Code is most likely not contributing a lot to the contention resolution success as it is probably the same for very many UE's. From a contention success perspective, the 5G-TMSI and M-TMSI are important for msg3.

According to one aspect of the present disclosure, the 5G-TMSI is part of the first message or msg3. However, the 5G-TMSI is only 32 bits and it is possible and desirable to, from a contention resolution perspective, include 40 bits. Accordingly, an 8-bit random value is included as part of msg3 to achieve the 40 bits and to also optimize the contention resolution success.

According to one aspect, part 1 of the first message or msg3 consists of 5G-TMSI (32 bits) + Random number (8 bits)
In another aspect of the present disclosure, and in situations when it may be considered more important to get an early indication of AMF identity, e.g., for routing purposes or for purposes of being able to do, e.g., load control of AMF's, it would be possible to select another set of bits. According to another aspect of the present disclosure, it would be possible to include, as part 1 of the transmission in msg3 the following:
AMF Set ID 12 bits
AMF Pointer 4 bits
Part of 5G-TMSI 24 bits.

In part 2, sent in a second message for example, msg3.5 or msg5 or at least in a message subsequent to msg.3, it would be possible to include the last 8 bits of the 5G-TMSI. Typically, the bits can be the least significant bits or the most significant bits, or any pre-determined bits of the 5G-TMSI 32-bit value.

The advantage of this embodiment of the present disclosure is that it would allow an early identification of the AMF, already directly after msg3 and it would be possible to, e.g., do early overload control and possibly reject the UE already at the reception of msg3, if it is determined that the AMF is overloaded. The trade-off made is that it is likely that the AMF part of part 1, the AMF set ID and the AMF pointer are likely to be the same for many UE's and as such are not optimal as being part of the contention resolution identity. It should however be considered in comparison to the advantage received with getting early identifiers of AMF.

The methods described herein are applicable for both transmitting msg3 with LTE radio access as well as with NR radio access, when connecting to a 5G core network. Splitting the identifier is considered important when there is a shortage of identifier space rather than be restricted by particular accesses.

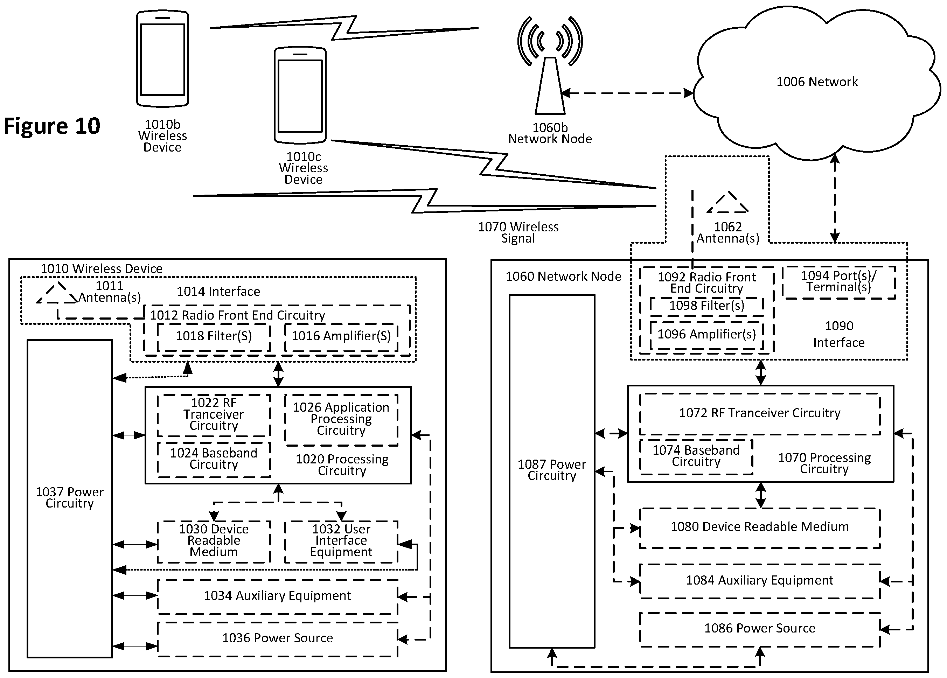

Although the subject matter described herein may be implemented in any appropriate type of system using any suitable components, the embodiments disclosed herein are described in relation to a wireless network, such as the example wireless network illustrated in Figure 10. For simplicity, the wireless network of Figure 10 only depicts network 1006, network nodes 1060 and 1060b, and WDs 1010, 1010b, and 1010c. In practice, a wireless network may further include any additional elements suitable to support communication between wireless devices or between a wireless device and another communication device, such as a landline telephone, a service provider, or any other network node or end device. Of the illustrated components, network node 1060 and wireless device (WD) 1010 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 1006 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1060 and WD 1010 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 10, network node 1060 includes processing circuitry 1070, device readable medium 1080, interface 1090, auxiliary equipment 1084, power source 1086, power circuitry 1087, and antenna 1062. Although network node 1060 illustrated in the example wireless network of Figure 10 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 1060 are depicted as single boxes located within a larger box, or nested within multiple boxes, in practice, a network node may comprise multiple different physical components that make up a single illustrated component (e.g., device readable medium 1080 may comprise multiple separate hard drives as well as multiple RAM modules).

Similarly, network node 1060 may be composed of multiple physically separate components (e.g., a NodeB component and a RNC component, or a BTS component and a BSC component, etc.), which may each have their own respective components. In certain scenarios in which network node 1060 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 1060 may be configured to support multiple radio access technologies (RATs). In such embodiments, some components may be duplicated (e.g., separate device readable medium 1080 for the different RATs) and some components may be reused (e.g., the same antenna 1062 may be shared by the RATs). Network node 1060 may also include multiple sets of the various illustrated components for different wireless technologies integrated into network node 1060, such as, for example, GSM, WCDMA, LTE, NR, WiFi, or Bluetooth wireless technologies. These wireless technologies may be integrated into the same or different chip or set of chips and other components within network node 1060.

Processing circuitry 1070 is configured to perform any determining, calculating, or similar operations (e.g., certain obtaining operations) described herein as being provided by a network node. These operations performed by processing circuitry 1070 may include processing information obtained by processing circuitry 1070 by, for example, converting the obtained information into other information, comparing the obtained information or converted information to information stored in the network node, and/or performing one or more operations based on the obtained information or converted information, and as a result of said processing making a determination.

Processing circuitry 1070 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1060 components, such as device readable medium 1080, network node 1060 functionality. For example, processing circuitry 1070 may execute instructions stored in device readable medium 1080 or in memory within processing circuitry 1070. Such functionality may include providing any of the various wireless features, functions, or benefits discussed herein. In some embodiments, processing circuitry 1070 may include a system on a chip (SOC).

In some embodiments, processing circuitry 1070 may include one or more of radio frequency (RF) transceiver circuitry 1072 and baseband processing circuitry 1074. In some embodiments, radio frequency (RF) transceiver circuitry 1072 and baseband processing circuitry 1074 may be on separate chips (or sets of chips), boards, or units, such as radio units and digital units. In alternative embodiments, part or all of RF transceiver circuitry 1072 and baseband processing circuitry 1074 may be on the same chip or set of chips, boards, or units

In certain embodiments, some or all of the functionality described herein as being provided by a network node, base station, eNB or other such network device may be performed by processing circuitry 1070 executing instructions stored on device readable medium 1080 or memory within processing circuitry 1070. In alternative embodiments, some or all of the functionality may be provided by processing circuitry 1070 without executing instructions stored on a separate or discrete device readable medium, such as in a hard-wired manner. In any of those embodiments, whether executing instructions stored on a device readable storage medium or not, processing circuitry 1070 can be configured to perform the described functionality. The benefits provided by such functionality are not limited to processing circuitry 1070 alone or to other components of network node 1060, but are enjoyed by network node 1060 as a whole, and/or by end users and the wireless network generally.

Device readable medium 1080 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 1070. Device readable medium 1080 may store any suitable instructions, data or information, including a computer program, software, an application including one or more of logic, rules, code, tables, etc. and/or other instructions capable of being executed by processing circuitry 1070 and, utilized by network node 1060. Device readable medium 1080 may be used to store any calculations made by processing circuitry 1070 and/or any data received via interface 1090. In some embodiments, processing circuitry 1070 and device readable medium 1080 may be considered to be integrated.

Interface 1090 is used in the wired or wireless communication of signalling and/or data between network node 1060, network 1006, and/or WDs 1010. As illustrated, interface 1090 comprises port(s)/terminal(s) 1094 to send and receive data, for example to and from network 1006 over a wired connection. Interface 1090 also includes radio front end circuitry 1092 that may be coupled to, or in certain embodiments a part of, antenna 1062. Radio front end circuitry 1092 comprises filters 1098 and amplifiers 1096. Radio front end circuitry 1092 may be connected to antenna 1062 and processing circuitry 1070. Radio front end circuitry may be configured to condition signals communicated between antenna 1062 and processing circuitry 1070. Radio front end circuitry 1092 may receive digital data that is to be sent out to other network nodes or WDs via a wireless connection. Radio front end circuitry 1092 may convert the digital data into a radio signal having the appropriate channel and bandwidth parameters using a combination of filters 1098 and/or amplifiers 1096. The radio signal may then be transmitted via antenna 1062. Similarly, when receiving data, antenna 1062 may collect radio signals which are then converted into digital data by radio front end circuitry 1092. The digital data may be passed to processing circuitry 1070. In other embodiments, the interface may comprise different components and/or different combinations of components.

In certain alternative embodiments, network node 1060 may not include separate radio front end circuitry 1092, instead, processing circuitry 1070 may comprise radio front end circuitry and may be connected to antenna 1062 without separate radio front end circuitry 1092. Similarly, in some embodiments, all or some of RF transceiver circuitry 1072 may be considered a part of interface 1090. In still other embodiments, interface 1090 may include one or more ports or terminals 1094, radio front end circuitry 1092, and RF transceiver circuitry 1072, as part of a radio unit (not shown), and interface 1090 may communicate with baseband processing circuitry 1074, which is part of a digital unit (not shown).

Antenna 1062 may include one or more antennas, or antenna arrays, configured to send and/or receive wireless signals. Antenna 1062 may be coupled to radio front end circuitry 1090 and may be any type of antenna capable of transmitting and receiving data and/or signals wirelessly. In some embodiments, antenna 1062 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 1062 may be separate from network node 1060 and may be connectable to network node 1060 through an interface or port.

Antenna 1062, interface 1090, and/or processing circuitry 1070 may be configured to perform any receiving operations and/or certain obtaining operations described herein as being performed by a network node. Any information, data and/or signals may be received from a wireless device, another network node and/or any other network equipment. Similarly, antenna 1062, interface 1090, and/or processing circuitry 1070 may be configured to perform any transmitting operations described herein as being performed by a network node. Any information, data and/or signals may be transmitted to a wireless device, another network node and/or any other network equipment.

Power circuitry 1087 may comprise, or be coupled to, power management circuitry and is configured to supply the components of network node 1060 with power for performing the functionality described herein. Power circuitry 1087 may receive power from power source 1086. Power source 1086 and/or power circuitry 1087 may be configured to provide power to the various components of network node 1060 in a form suitable for the respective components (e.g., at a voltage and current level needed for each respective component). Power source 1086 may either be included in, or external to, power circuitry 1087 and/or network node 1060. For example, network node 1060 may be connectable to an external power source (e.g., an electricity outlet) via an input circuitry or interface such as an electrical cable, whereby the external power source supplies power to power circuitry 1087. As a further example, power source 1086 may comprise a source of power in the form of a battery or battery pack which is connected to, or integrated in, power circuitry 1087. The battery may provide backup power should the external power source fail. Other types of power sources, such as photovoltaic devices, may also be used.

Alternative embodiments of network node 1060 may include additional components beyond those shown in Figure 10 that may be responsible for providing certain aspects of the network node's functionality, including any of the functionality described herein and/or any functionality necessary to support the subject matter described herein. For example, network node 1060 may include user interface equipment to allow input of information into network node 1060 and to allow output of information from network node 1060. This may allow a user to perform diagnostic, maintenance, repair, and other administrative functions for network node 1060.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 1010 includes antenna 1011, interface 1014, processing circuitry 1020, device readable medium 1030, user interface equipment 1032, auxiliary equipment 1034, power source 1036 and power circuitry 1037. WD 1010 may include multiple sets of one or more of the illustrated components for different wireless technologies supported by WD 1010, such as, for example, GSM, WCDMA, LTE, NR, WiFi, WiMAX, or Bluetooth wireless technologies, just to mention a few. These wireless technologies may be integrated into the same or different chips or set of chips as other components within WD 1010.

Antenna 1011 may include one or more antennas or antenna arrays, configured to send and/or receive wireless signals, and is connected to interface 1014. In certain alternative embodiments, antenna 1011 may be separate from WD 1010 and be connectable to WD 1010 through an interface or port. Antenna 1011, interface 1014, and/or processing circuitry 1020 may be configured to perform any receiving or transmitting operations described herein as being performed by a WD. Any information, data and/or signals may be received from a network node and/or another WD. In some embodiments, radio front end circuitry and/or antenna 1011 may be considered an interface.

As illustrated, interface 1014 comprises radio front end circuitry 1012 and antenna 1011. Radio front end circuitry 1012 comprise one or more filters 1018 and amplifiers 1016. Radio front end circuitry 1014 is connected to antenna 1011 and processing circuitry 1020, and is configured to condition signals communicated between antenna 1011 and processing circuitry 1020. Radio front end circuitry 1012 may be coupled to or a part of antenna 1011. In some embodiments, WD 1010 may not include separate radio front end circuitry 1012; rather, processing circuitry 1020 may comprise radio front end circuitry and may be connected to antenna 1011. Similarly, in some embodiments, some or all of RF transceiver circuitry 1022 may be considered a part of interface 1014. Radio front end circuitry 1012 may receive digital data that is to be sent out to other network nodes or WDs via a wireless connection. Radio front end circuitry 1012 may convert the digital data into a radio signal having the appropriate channel and bandwidth parameters using a combination of filters 1018 and/or amplifiers 1016. The radio signal may then be transmitted via antenna 1011. Similarly, when receiving data, antenna 1011 may collect radio signals which are then converted into digital data by radio front end circuitry 1012. The digital data may be passed to processing circuitry 1020. In other embodiments, the interface may comprise different components and/or different combinations of components.

Processing circuitry 1020 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 1010 components, such as device readable medium 1030, WD 1010 functionality. Such functionality may include providing any of the various wireless features or benefits discussed herein. For example, processing circuitry 1020 may execute instructions stored in device readable medium 1030 or in memory within processing circuitry 1020 to provide the functionality disclosed herein.

As illustrated, processing circuitry 1020 includes one or more of RF transceiver circuitry 1022, baseband processing circuitry 1024, and application processing circuitry 1026. In other embodiments, the processing circuitry may comprise different components and/or different combinations of components. In certain embodiments processing circuitry 1020 of WD 1010 may comprise a SOC. In some embodiments, RF transceiver circuitry 1022, baseband processing circuitry 1024, and application processing circuitry 1026 may be on separate chips or sets of chips. In alternative embodiments, part or all of baseband processing circuitry 1024 and application processing circuitry 1026 may be combined into one chip or set of chips, and RF transceiver circuitry 1022 may be on a separate chip or set of chips. In still alternative embodiments, part or all of RF transceiver circuitry 1022 and baseband processing circuitry 1024 may be on the same chip or set of chips, and application processing circuitry 1026 may be on a separate chip or set of chips. In yet other alternative embodiments, part or all of RF transceiver circuitry 1022, baseband processing circuitry 1024, and application processing circuitry 1026 may be combined in the same chip or set of chips. In some embodiments, RF transceiver circuitry 1022 may be a part of interface 1014. RF transceiver circuitry 1022 may condition RF signals for processing circuitry 1020.

In certain embodiments, some or all of the functionality described herein as being performed by a WD may be provided by processing circuitry 1020 executing instructions stored on device readable medium 1030, which in certain embodiments may be a computer-readable storage medium. In alternative embodiments, some or all of the functionality may be provided by processing circuitry 1020 without executing instructions stored on a separate or discrete device readable storage medium, such as in a hard-wired manner. In any of those particular embodiments, whether executing instructions stored on a device readable storage medium or not, processing circuitry 1020 can be configured to perform the described functionality. The benefits provided by such functionality are not limited to processing circuitry 1020 alone or to other components of WD 1010, but are enjoyed by WD 1010 as a whole, and/or by end users and the wireless network generally.

Processing circuitry 1020 may be configured to perform any determining, calculating, or similar operations (e.g., certain obtaining operations) described herein as being performed by a WD. These operations, as performed by processing circuitry 1020, may include processing information obtained by processing circuitry 1020 by, for example, converting the obtained information into other information, comparing the obtained information or converted information to information stored by WD 1010, and/or performing one or more operations based on the obtained information or converted information, and as a result of said processing making a determination.

Device readable medium 1030 may be operable to store a computer program, software, an application including one or more of logic, rules, code, tables, etc. and/or other instructions capable of being executed by processing circuitry 1020. Device readable medium 1030 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 1020. In some embodiments, processing circuitry 1020 and device readable medium 1030 may be considered to be integrated.

User interface equipment 1032 may provide components that allow for a human user to interact with WD 1010. Such interaction may be of many forms, such as visual, audial, tactile, etc. User interface equipment 1032 may be operable to produce output to the user and to allow the user to provide input to WD 1010. The type of interaction may vary depending on the type of user interface equipment 1032 installed in WD 1010. For example, if WD 1010 is a smart phone, the interaction may be via a touch screen; if WD 1010 is a smart meter, the interaction may be through a screen that provides usage (e.g., the number of gallons used) or a speaker that provides an audible alert (e.g., if smoke is detected). User interface equipment 1032 may include input interfaces, devices and circuits, and output interfaces, devices and circuits. User interface equipment 1032 is configured to allow input of information into WD 1010, and is connected to processing circuitry 1020 to allow processing circuitry 1020 to process the input information. User interface equipment 1032 may include, for example, a microphone, a proximity or other sensor, keys/buttons, a touch display, one or more cameras, a USB port, or other input circuitry. User interface equipment 1032 is also configured to allow output of information from WD 1010, and to allow processing circuitry 1020 to output information from WD 1010. User interface equipment 1032 may include, for example, a speaker, a display, vibrating circuitry, a USB port, a headphone interface, or other output circuitry. Using one or more input and output interfaces, devices, and circuits, of user interface equipment 1032, WD 1010 may communicate with end users and/or the wireless network and allow them to benefit from the functionality described herein.

Auxiliary equipment 1034 is operable to provide more specific functionality which may not be generally performed by WDs. This may comprise specialized sensors for doing measurements for various purposes, interfaces for additional types of communication such as wired communications etc. The inclusion and type of components of auxiliary equipment 1034 may vary depending on the embodiment and/or scenario.

Power source 1036 may, in some embodiments, be in the form of a battery or battery pack. Other types of power sources, such as an external power source (e.g., an electricity outlet), photovoltaic devices or power cells, may also be used. WD 1010 may further comprise power circuitry 1037 for delivering power from power source 1036 to the various parts of WD 1010 which need power from power source 1036 to carry out any functionality described or indicated herein. Power circuitry 1037 may in certain embodiments comprise power management circuitry. Power circuitry 1037 may additionally or alternatively be operable to receive power from an external power source; in which case WD 1010 may be connectable to the external power source (such as an electricity outlet) via input circuitry or an interface such as an electrical power cable. Power circuitry 1037 may also in certain embodiments be operable to deliver power from an external power source to power source 1036. This may be, for example, for the charging of power source 1036. Power circuitry 1037 may perform any formatting, converting, or other modification to the power from power source 1036 to make the power suitable for the respective components of WD 1010 to which power is supplied.

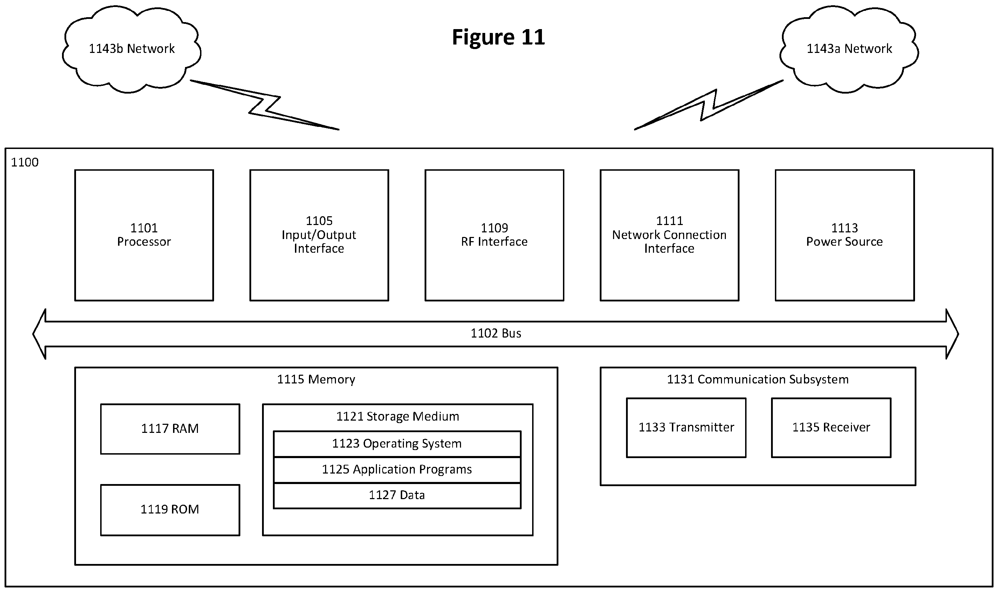

Figure 11 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 11200 may be any UE identified by the 3^{rd} Generation Partnership Project (3GPP), including a NB-IoT UE, a machine type communication (MTC) UE, and/or an enhanced MTC (eMTC) UE. UE 1100, as illustrated in Figure 11, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although Figure 11 is a UE, the components discussed herein are equally applicable to a WD, and vice-versa.

In Figure 11, UE 1100 includes processing circuitry 1101 that is operatively coupled to input/output interface 1105, radio frequency (RF) interface 1109, network connection interface 1111, memory 1115 including random access memory (RAM) 1117, read-only memory (ROM) 1119, and storage medium 1121 or the like, communication subsystem 1131, power source 1133, and/or any other component, or any combination thereof. Storage medium 1121 includes operating system 1123, application program 1125, and data 1127. In other embodiments, storage medium 1121 may include other similar types of information. Certain UEs may utilize all of the components shown in Figure 11, or only a subset of the components. The level of integration between the components may vary from one UE to another UE. Further, certain UEs may contain multiple instances of a component, such as multiple processors, memories, transceivers, transmitters, receivers, etc.

In Figure 11, processing circuitry 1101 may be configured to process computer instructions and data. Processing circuitry 1101 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 1101 may include two central processing units (CPUs). Data may be information in a form suitable for use by a computer.

In the depicted embodiment, input/output interface 1105 may be configured to provide a communication interface to an input device, output device, or input and output device. UE 1100 may be configured to use an output device via input/output interface 1105. An output device may use the same type of interface port as an input device. For example, a USB port may be used to provide input to and output from UE 1100. The output device may be a speaker, a sound card, a video card, a display, a monitor, a printer, an actuator, an emitter, a smartcard, another output device, or any combination thereof. UE 1100 may be configured to use an input device via input/output interface 1105 to allow a user to capture information into UE 1100. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 11, RF interface 1109 may be configured to provide a communication interface to RF components such as a transmitter, a receiver, and an antenna. Network connection interface 1111 may be configured to provide a communication interface to network 1143a. Network 1143a may encompass wired and/or wireless networks such as a local-area network (LAN), a wide-area network (WAN), a computer network, a wireless network, a telecommunications network, another like network or any combination thereof. For example, network 1143a may comprise a Wi-Fi network. Network connection interface 1111 may be configured to include a receiver and a transmitter interface used to communicate with one or more other devices over a communication network according to one or more communication protocols, such as Ethernet, TCP/IP, SONET, ATM, or the like. Network connection interface 1111 may implement receiver and transmitter functionality appropriate to the communication network links (e.g., optical, electrical, and the like). The transmitter and receiver functions may share circuit components, software or firmware, or alternatively may be implemented separately.

RAM 1117 may be configured to interface via bus 1102 to processing circuitry 1101 to provide storage or caching of data or computer instructions during the execution of software programs such as the operating system, application programs, and device drivers. ROM 1119 may be configured to provide computer instructions or data to processing circuitry 1101. For example, ROM 1119 may be configured to store invariant low-level system code or data for basic system functions such as basic input and output (I/O), startup, or reception of keystrokes from a keyboard that are stored in a non-volatile memory. Storage medium 1121 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 1121 may be configured to include operating system 1123, application program 1125 such as a web browser application, a widget or gadget engine or another application, and data file 1127. Storage medium 1121 may store, for use by UE 1100, any of a variety of various operating systems or combinations of operating systems.

Storage medium 1121 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1121 may allow UE 1100 to access computer-executable instructions, application programs or the like, stored on transitory or non-transitory memory media, to off-load data, or to upload data. An article of manufacture, such as one utilizing a communication system may be tangibly embodied in storage medium 1121, which may comprise a device readable medium.

In Figure 11, processing circuitry 1101 may be configured to communicate with network 1143b using communication subsystem 1131. Network 1143a and network 1143b may be the same network or networks or different network or networks. Communication subsystem 1131 may be configured to include one or more transceivers used to communicate with network 1143b. For example, communication subsystem 1131 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 1133 and/or receiver 1135 to implement transmitter or receiver functionality, respectively, appropriate to the RAN links (e.g., frequency allocations and the like). Further, transmitter 1133 and receiver 1135 of each transceiver may share circuit components, software or firmware, or alternatively may be implemented separately.

In the illustrated embodiment, the communication functions of communication subsystem 1131 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 1131 may include cellular communication, Wi-Fi communication, Bluetooth communication, and GPS communication. Network 1143b may encompass wired and/or wireless networks such as a local-area network (LAN), a wide-area network (WAN), a computer network, a wireless network, a telecommunications network, another like network or any combination thereof. For example, network 1143b may be a cellular network, a Wi-Fi network, and/or a near-field network. Power source 1113 may be configured to provide alternating current (AC) or direct current (DC) power to components of UE 1100.

The features, benefits and/or functions described herein may be implemented in one of the components of UE 1100 or partitioned across multiple components of UE 1100. Further, the features, benefits, and/or functions described herein may be implemented in any combination of hardware, software or firmware. In one example, communication subsystem 1131 may be configured to include any of the components described herein. Further, processing circuitry 1101 may be configured to communicate with any of such components over bus 1102. In another example, any of such components may be represented by program instructions stored in memory that when executed by processing circuitry 1101 perform the corresponding functions described herein. In another example, the functionality of any of such components may be partitioned between processing circuitry 1101 and communication subsystem 1131. In another example, the non-computationally intensive functions of any of such components may be implemented in software or firmware and the computationally intensive functions may be implemented in hardware.

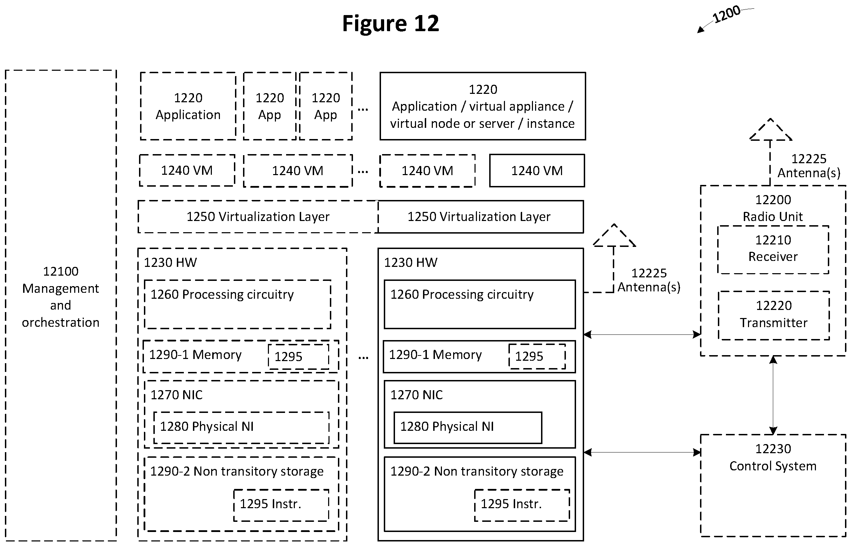

Figure 12 is a schematic block diagram illustrating a virtualization environment 1200 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 1200 hosted by one or more of hardware nodes 1230. Further, in embodiments in which the virtual node is not a radio access node or does not require radio connectivity (e.g., a core network node), then the network node may be entirely virtualized.

The functions may be implemented by one or more applications 1220 (which may alternatively be called software instances, virtual appliances, network functions, virtual nodes, virtual network functions, etc.) operative to implement some of the features, functions, and/or benefits of some of the embodiments disclosed herein. Applications 1220 are run in virtualization environment 1200 which provides hardware 1230 comprising processing circuitry 1260 and memory 1290. Memory 1290 contains instructions 1295 executable by processing circuitry 1260 whereby application 1220 is operative to provide one or more of the features, benefits, and/or functions disclosed herein.

Virtualization environment 1200, comprises general-purpose or special-purpose network hardware devices 1230 comprising a set of one or more processors or processing circuitry 1260, which may be commercial off-the-shelf (COTS) processors, dedicated Application Specific Integrated Circuits (ASICs), or any other type of processing circuitry including digital or analog hardware components or special purpose processors. Each hardware device may comprise memory 1290-1 which may be non-persistent memory for temporarily storing instructions 1295 or software executed by processing circuitry 1260. Each hardware device may comprise one or more network interface controllers (NICs) 1270, also known as network interface cards, which include physical network interface 1280. Each hardware device may also include non-transitory, persistent, machine-readable storage media 1290-2 having stored therein software 1295 and/or instructions executable by processing circuitry 1260. Software 1295 may include any type of software including software for instantiating one or more virtualization layers 1250 (also referred to as hypervisors), software to execute virtual machines 1240 as well as software allowing it to execute functions, features and/or benefits described in relation with some embodiments described herein.

Virtual machines 1240, comprise virtual processing, virtual memory, virtual networking or interface and virtual storage, and may be run by a corresponding virtualization layer 1250 or hypervisor. Different embodiments of the instance of virtual appliance 1220 may be implemented on one or more of virtual machines 1240, and the implementations may be made in different ways.

During operation, processing circuitry 1260 executes software 1295 to instantiate the hypervisor or virtualization layer 1250, which may sometimes be referred to as a virtual machine monitor (VMM). Virtualization layer 1250 may present a virtual operating platform that appears like networking hardware to virtual machine 1240.

As shown in Figure 12, hardware 1230 may be a standalone network node with generic or specific components. Hardware 1230 may comprise antenna 12225 and may implement some functions via virtualization. Alternatively, hardware 1230 may be part of a larger cluster of hardware (e.g. such as in a data center or customer premise equipment (CPE)) where many hardware nodes work together and are managed via management and orchestration (MANO) 12100, which, among others, oversees lifecycle management of applications 1220.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 1240 may be a software implementation of a physical machine that runs programs as if they were executing on a physical, non-virtualized machine. Each of virtual machines 1240, and that part of hardware 1230 that executes that virtual machine, be it hardware dedicated to that virtual machine and/or hardware shared by that virtual machine with others of the virtual machines 1240, forms a separate virtual network elements (VNE).

Still in the context of NFV, Virtual Network Function (VNF) is responsible for handling specific network functions that run in one or more virtual machines 1240 on top of hardware networking infrastructure 1230 and corresponds to application 1220 in Figure 12.

In some embodiments, one or more radio units 12200 that each include one or more transmitters 12220 and one or more receivers 12210 may be coupled to one or more antennas 12225. Radio units 12200 may communicate directly with hardware nodes 1230 via one or more appropriate network interfaces and may be used in combination with the virtual components to provide a virtual node with radio capabilities, such as a radio access node or a base station.

In some embodiments, some signalling can be affected with the use of control system 12230 which may alternatively be used for communication between the hardware nodes 1230 and radio units 12200.

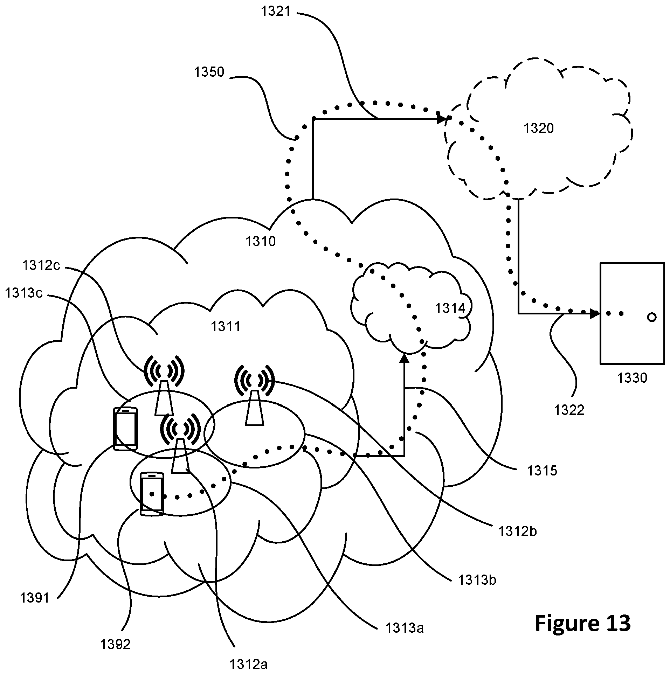

With reference to FIGURE 13, in accordance with an embodiment, a communication system includes telecommunication network 1310, such as a 3GPP-type cellular network, which comprises access network 1311, such as a radio access network, and core network 1314. Access network 1311 comprises a plurality of base stations 1312a, 1312b, 1312c, such as NBs, eNBs, gNBs or other types of wireless access points, each defining a corresponding coverage area 1313a, 1313b, 1313c. Each base station 1312a, 1312b, 1312c is connectable to core network 1314 over a wired or wireless connection 1315. A first UE 1391 located in coverage area 1313c is configured to wirelessly connect to, or be paged by, the corresponding base station 1312c. A second UE 1392 in coverage area 1313a is wirelessly connectable to the corresponding base station 1312a. While a plurality of UEs 1391, 1392 are illustrated in this example, the disclosed embodiments are equally applicable to a situation where a sole UE is in the coverage area or where a sole UE is connecting to the corresponding base station 1312.

Telecommunication network 1310 is itself connected to host computer 1330, which may be embodied in the hardware and/or software of a standalone server, a cloud-implemented server, a distributed server or as processing resources in a server farm. Host computer 1330 may be under the ownership or control of a service provider, or may be operated by the service provider or on behalf of the service provider. Connections 1321 and 1322 between telecommunication network 1310 and host computer 1330 may extend directly from core network 1314 to host computer 1330 or may go via an optional intermediate network 1320. Intermediate network 1320 may be one of, or a combination of more than one of, a public, private or hosted network; intermediate network 1320, if any, may be a backbone network or the Internet; in particular, intermediate network 1320 may comprise two or more sub-networks (not shown).

The communication system of Figure 13 as a whole enables connectivity between the connected UEs 1391, 1392 and host computer 1330. The connectivity may be described as an over-the-top (OTT) connection 1350. Host computer 1330 and the connected UEs 1391, 1392 are configured to communicate data and/or signaling via OTT connection 1350, using access network 1311, core network 1314, any intermediate network 1320 and possible further infrastructure (not shown) as intermediaries. OTT connection 1350 may be transparent in the sense that the participating communication devices through which OTT connection 1350 passes are unaware of routing of uplink and downlink communications. For example, base station 1312 may not or need not be informed about the past routing of an incoming downlink communication with data originating from host computer 1330 to be forwarded (e.g., handed over) to a connected UE 1391. Similarly, base station 1312 need not be aware of the future routing of an outgoing uplink communication originating from the UE 1391 towards the host computer 1330.

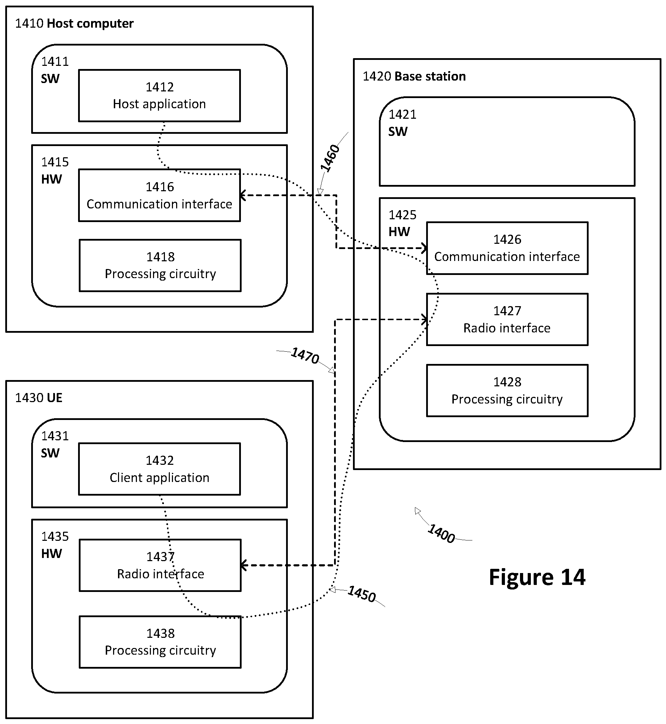

Example implementations, in accordance with an embodiment, of the UE, base station and host computer discussed in the preceding paragraphs will now be described with reference to Figure 14. In communication system 1400, host computer 1410 comprises hardware 1415 including communication interface 1416 configured to set up and maintain a wired or wireless connection with an interface of a different communication device of communication system 1400. Host computer 1410 further comprises processing circuitry 1418, which may have storage and/or processing capabilities. In particular, processing circuitry 1418 may comprise one or more programmable processors, application-specific integrated circuits, field programmable gate arrays or combinations of these (not shown) adapted to execute instructions. Host computer 1410 further comprises software 1411, which is stored in or accessible by host computer 1410 and executable by processing circuitry 1418. Software 1411 includes host application 1412. Host application 1412 may be operable to provide a service to a remote user, such as UE 1430 connecting via OTT connection 1450 terminating at UE 1430 and host computer 1410. In providing the service to the remote user, host application 1412 may provide user data which is transmitted using OTT connection 1450.

Communication system 1400 further includes base station 1420 provided in a telecommunication system and comprising hardware 1425 enabling it to communicate with host computer 1410 and with UE 1430. Hardware 1425 may include communication interface 1426 for setting up and maintaining a wired or wireless connection with an interface of a different communication device of communication system 1400, as well as radio interface 1427 for setting up and maintaining at least wireless connection 1470 with UE 1430 located in a coverage area (not shown in Figure 14) served by base station 1420. Communication interface 1426 may be configured to facilitate connection 1460 to host computer 1410. Connection 1460 may be direct or it may pass through a core network (not shown in Figure 14) of the telecommunication system and/or through one or more intermediate networks outside the telecommunication system. In the embodiment shown, hardware 1425 of base station 1420 further includes processing circuitry 1428, which may comprise one or more programmable processors, application-specific integrated circuits, field programmable gate arrays or combinations of these (not shown) adapted to execute instructions. Base station 1420 further has software 1421 stored internally or accessible via an external connection.

Communication system 1400 further includes UE 1430 already referred to. Its hardware 1435 may include radio interface 1437 configured to set up and maintain wireless connection 1470 with a base station serving a coverage area in which UE 1430 is currently located. Hardware 1435 of UE 1430 further includes processing circuitry 1438, which may comprise one or more programmable processors, application-specific integrated circuits, field programmable gate arrays or combinations of these (not shown) adapted to execute instructions. UE 1430 further comprises software 1431, which is stored in or accessible by UE 1430 and executable by processing circuitry 1438. Software 1431 includes client application 1432. Client application 1432 may be operable to provide a service to a human or non-human user via UE 1430, with the support of host computer 1410. In host computer 1410, an executing host application 1412 may communicate with the executing client application 1432 via OTT connection 1450 terminating at UE 1430 and host computer 1410. In providing the service to the user, client application 1432 may receive request data from host application 1412 and provide user data in response to the request data. OTT connection 1450 may transfer both the request data and the user data. Client application 1432 may interact with the user to generate the user data that it provides.

It is noted that host computer 1410, base station 1420 and UE 1430 illustrated in Figure 14 may be similar or identical to host computer 1330, one of base stations 1312a, 1312b, 1312c and one of UEs 1391, 1392 of Figure 13, respectively. This is to say, the inner workings of these entities may be as shown in Figure 14 and independently, the surrounding network topology may be that of Figure 13.

In Figure 14, OTT connection 1450 has been drawn abstractly to illustrate the communication between host computer 1410 and UE 1430 via base station 1420, without explicit reference to any intermediary devices and the precise routing of messages via these devices. Network infrastructure may determine the routing, which it may be configured to hide from UE 1430 or from the service provider operating host computer 1410, or both. While OTT connection 1450 is active, the network infrastructure may further take decisions by which it dynamically changes the routing (e.g., on the basis of load balancing consideration or reconfiguration of the network).

Wireless connection 1470 between UE 1430 and base station 1420 is in accordance with the teachings of the embodiments described throughout this disclosure. One or more of the various embodiments improve the performance of OTT services provided to UE 1430 using OTT connection 1450, in which wireless connection 1470 forms the last segment. More precisely, the teachings of these embodiments may improve UE compatibility with different types of networks and thereby provide benefits such as reduced user waiting times or better responsiveness. For example, a UE may be able to connect to a network node that would otherwise have difficulty handling the length of a 5G-S-TMSI assigned to the UE.

A measurement procedure may be provided for the purpose of monitoring data rate, latency and other factors on which the one or more embodiments improve. There may further be an optional network functionality for reconfiguring OTT connection 1450 between host computer 1410 and UE 1430, in response to variations in the measurement results. The measurement procedure and/or the network functionality for reconfiguring OTT connection 1450 may be implemented in software 1411 and hardware 1415 of host computer 1410 or in software 1431 and hardware 1435 of UE 1430, or both. In embodiments, sensors (not shown) may be deployed in or in association with communication devices through which OTT connection 1450 passes; the sensors may participate in the measurement procedure by supplying values of the monitored quantities exemplified above, or supplying values of other physical quantities from which software 1411, 1431 may compute or estimate the monitored quantities. The reconfiguring of OTT connection 1450 may include message format, retransmission settings, preferred routing etc.; the reconfiguring need not affect base station 1420, and it may be unknown or imperceptible to base station 1420. Such procedures and functionalities may be known and practiced in the art. In certain embodiments, measurements may involve proprietary UE signaling facilitating host computer 1410's measurements of throughput, propagation times, latency and the like. The measurements may be implemented in that software 1411 and 1431 causes messages to be transmitted, in particular empty or 'dummy' messages, using OTT connection 1450 while it monitors propagation times, errors etc.

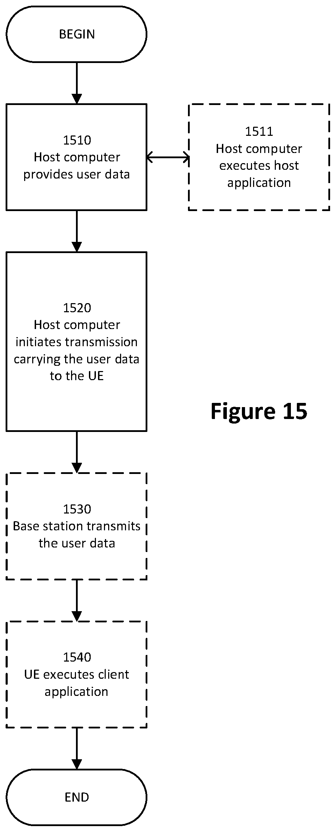

Figure 15 is a flowchart illustrating a method implemented in a communication system, in accordance with one embodiment. The communication system includes a host computer, a base station and a UE which may be those described with reference to Figures 13 and 14. For simplicity of the present disclosure, only drawing references to Figure 15 will be included in this section. In step 1510, the host computer provides user data. In substep 1511 (which may be optional) of step 1510, the host computer provides the user data by executing a host application. In step 1520, the host computer initiates a transmission carrying the user data to the UE. In step 1530 (which may be optional), the base station transmits to the UE the user data which was carried in the transmission that the host computer initiated, in accordance with the teachings of the embodiments described throughout this disclosure. In step 1540 (which may also be optional), the UE executes a client application associated with the host application executed by the host computer.

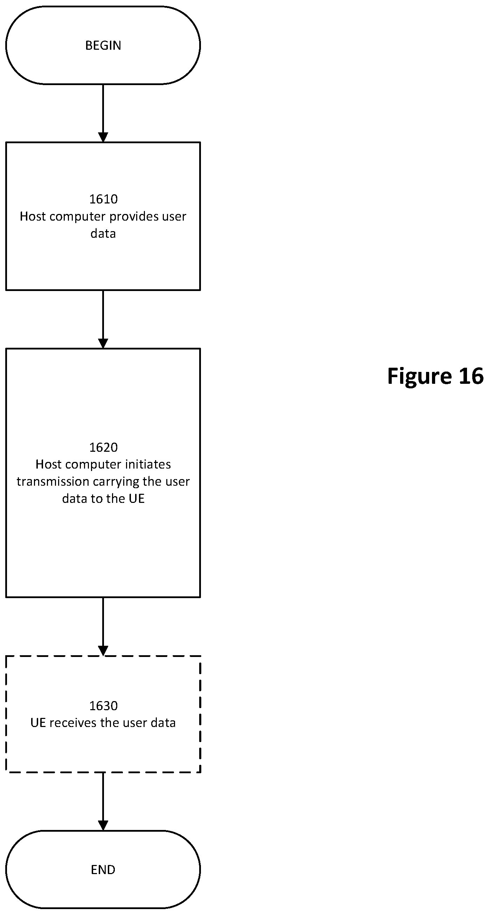

Figure 16 is a flowchart illustrating a method implemented in a communication system, in accordance with one embodiment. The communication system includes a host computer, a base station and a UE which may be those described with reference to Figures 13 and 14. For simplicity of the present disclosure, only drawing references to Figure 16 will be included in this section. In step 1610 of the method, the host computer provides user data. In an optional substep (not shown) the host computer provides the user data by executing a host application. In step 1620, the host computer initiates a transmission carrying the user data to the UE. The transmission may pass via the base station, in accordance with the teachings of the embodiments described throughout this disclosure. In step 1630 (which may be optional), the UE receives the user data carried in the transmission.

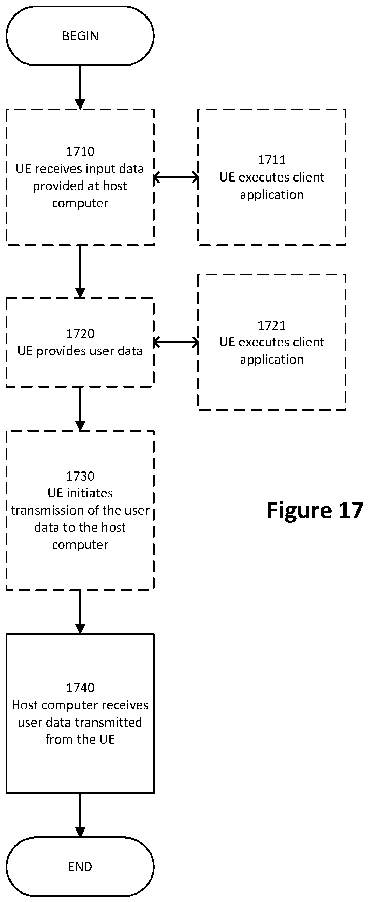

Figure 17 is a flowchart illustrating a method implemented in a communication system, in accordance with one embodiment. The communication system includes a host computer, a base station and a UE which may be those described with reference to Figures 13 and 14. For simplicity of the present disclosure, only drawing references to Figure 17 will be included in this section. In step 1710 (which may be optional), the UE receives input data provided by the host computer. Additionally or alternatively, in step 1720, the UE provides user data. In substep 1721 (which may be optional) of step 1720, the UE provides the user data by executing a client application. In substep 1711 (which may be optional) of step 1710, the UE executes a client application which provides the user data in reaction to the received input data provided by the host computer. In providing the user data, the executed client application may further consider user input received from the user. Regardless of the specific manner in which the user data was provided, the UE initiates, in substep 1730 (which may be optional), transmission of the user data to the host computer. In step 1740 of the method, the host computer receives the user data transmitted from the UE, in accordance with the teachings of the embodiments described throughout this disclosure.

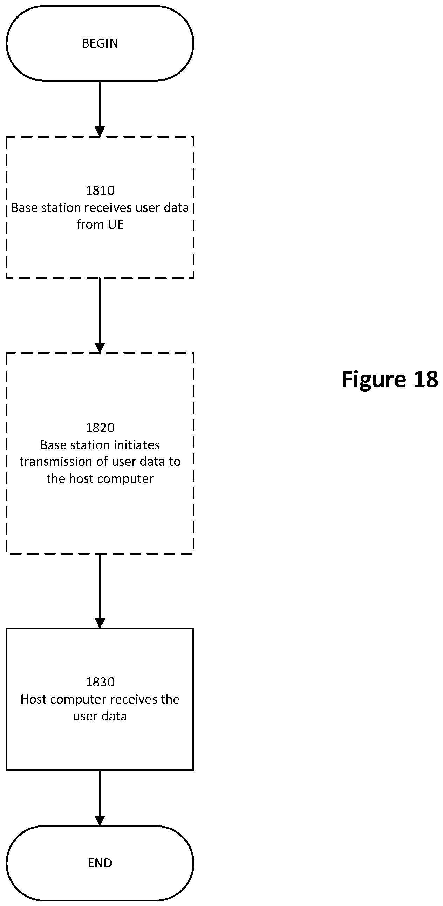

Figure 18 is a flowchart illustrating a method implemented in a communication system, in accordance with one embodiment. The communication system includes a host computer, a base station and a UE which may be those described with reference to Figures 13 and 14. For simplicity of the present disclosure, only drawing references to Figure 18 will be included in this section. In step 1810 (which may be optional), in accordance with the teachings of the embodiments described throughout this disclosure, the base station receives user data from the UE. In step 1820 (which may be optional), the base station initiates transmission of the received user data to the host computer. In step 1830 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

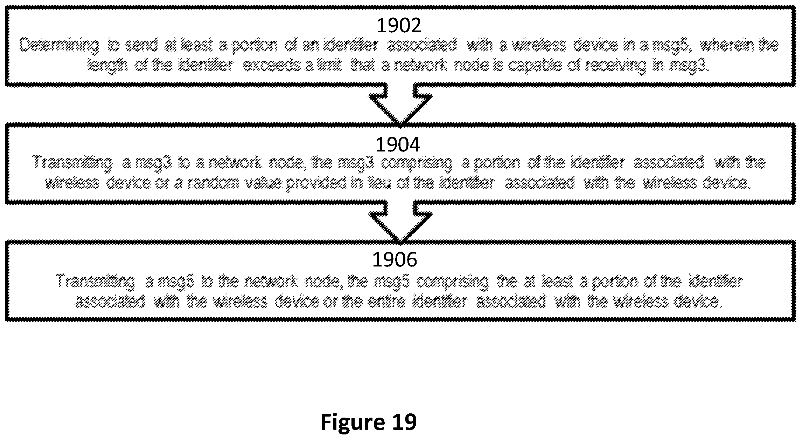

Figure 19 depicts a method in accordance with particular embodiments, comprises determining to send at least a portion of an identifier associated with a wireless device in a msg5, wherein the length of the identifier exceeds a limit that a network node is capable of receiving in msg3 (step 1902); transmitting a msg3 to a network node, the msg3 comprising a portion of the identifier associated with the wireless device or a random value provided in lieu of the identifier associated with the wireless device (step 1904); and transmitting a msg5 to the network node, the msg5 comprising the at least a portion of the identifier associated with the wireless device or the entire identifier associated with the wireless device (step 1906).

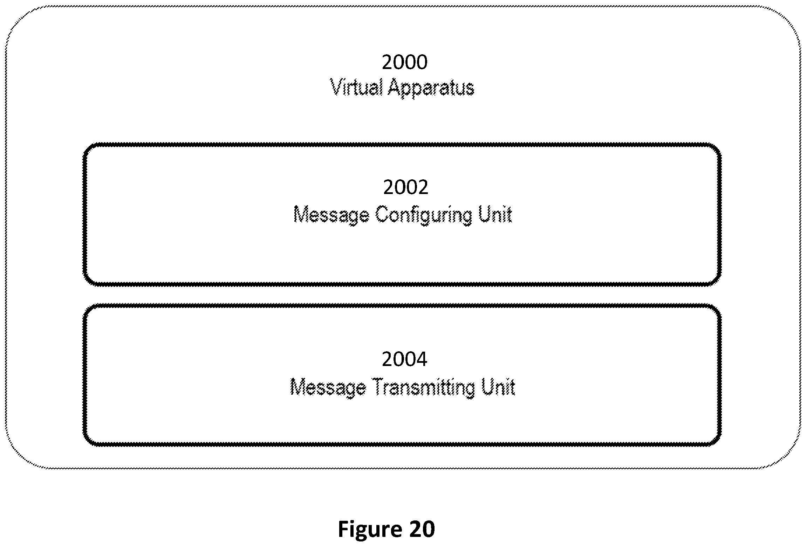

Figure 20 illustrates a schematic block diagram of an apparatus 2000 in a wireless network (for example, the wireless network shown in Figure 10). The apparatus may be implemented in a wireless device or network node (e.g., wireless device 1010 or network node 1060 shown in Figure 10). Apparatus 2000 is operable to carry out the example method described with reference to Figure 19 and possibly any other processes or methods disclosed herein. It is also to be understood that the method of Figure 19 is not necessarily carried out solely by apparatus 2000. At least some operations of the method can be performed by one or more other entities.

Virtual Apparatus 2000 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause Message Configuring unit 2002, Message Transmitting unit 2004, and any other suitable units of apparatus 2000 to perform corresponding functions according one or more embodiments of the present disclosure.

As illustrated in Figure 20, apparatus 2000 includes Message Configuring Unit 2002 and Message Transmitting unit 2004. Message Configuring unit 2002 is configured to configure msg3 and msg5. For example, if an identifier associated with a wireless device (e.g., 5G-S-TMSI) exceeds a limit (e.g., more than 40 bits), Message Configuration unit 2002 configures msg5 to include at least a portion of the identifier. In one embodiment, Message Configuration unit 2002 splits the identifier between msg3 and msg5. How to split the identifier (e.g., how many bits of the identifier to configure in msg3, how many bits of the identifier to configure in msg5, and which of msg3 or msg5 is to include the most significant bits) may be pre-defined (e.g., based on rules stored in memory) or determined based on signalling exchanged with a network node. Message Transmitting unit 2004 receives msg3 and msg5 from Message Configuration unit 2002 and transmits msg3 and msg5 to a network node, for example, according to a procedure to establish or resume an RRC connection.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

In some embodiments a computer program, computer program product or computer readable storage medium comprises instructions which when executed on a computer perform any of the embodiments disclosed herein. In further examples the instructions are carried on a signal or carrier and which are executable on a computer wherein when executed perform any of the embodiments disclosed herein.

### APPENDIX

| **3GPP TSG-RAN WG2 #102 Busan, Korea, 21^{st} - 25^{th} May 2018** | | **Tdoc R2-1806847** |
|---|---|---|
| **Agenda Item:** | **9.7.2** | |
| **Source:** | **Ericsson** | |
| **Title:** | **Split of 5G-S-TMSI** | |
| **Document for:** | **Discussion, Decision** | |

### INTRODUCTION

In Ran2#101bis (Sanya) it was discussed how an increased length of 5G-S-TMSI would be handled given the limited size of msg3. As it is not really critical to get the identifier provided by CN (Like 5G-S-TMSI) until after msg5, it was, after an off-line discussion [1] possible to reach the following agreement:

| | |
|---|---|
| Agreements | |
| 1 | Part of 5G-S-TMSI as identifier in RRCConnectionRequest message and signal the rest of 5G-S-TMSI in msg5. |

Prior to this, SA2 had verified that the length of the 5G-S-TMSI is going to be 48 bits [2].

This contribution addresses the split of 5G-S-TMSI.

### DISCUSSION

The 5G-S-TMSI is built up from a set of other identifiers, according to:
<5G-S-TMSI> := <AMF Set ID> <AMF Pointer> <5G-TMSI>

In 3GPP TS 23.003, it is described that
*5G-TMSI shall be of 32 bits length.*
*AMF Region ID shall be of 16 bits length.*
*AMF Set ID shall be of 4 bits length.*

### AMF Pointer shall be of 4 bits length

This is however not the basis for the 48-bit 5G-S-TMSI, instead, the proposal that triggered LS is described in [3] and include:

| | |
|---|---|
| AMF Set ID | -12 bits |
| AMF Pointer | -4 bits |
| 5G-TMSI | -32 bits |

The important aspect of including an identifier in msg3 in setup request, when there is no AS context that needs to be retrieved, is mainly to avoid collision, i.e., it is for purposes of contention resolution. In [4], we described that the identifier in msg3 can either be a random value or a part of the 5G-S-TMSI.

Since splitting the 5G-S-TMSI is considered, from a contention resolution perspective, we propose to maintain a 40-bit field in msg3. This would then mean that we don't have to change anything with respect to the MAC CE for contention resolution, since this is already calculated based on a 40-bit identifier.

| | |
|---|---|
| **Proposal 1** | **We propose to keep a 40-bit identifier in msg3, to avoid any need to change MAC CE for contention resolution.** |

The next question to address is *what* 40 bits that should be included in msg3, and what bits that should be left to msg5.

Below is a comparison figure taken from [3], illustrating the GUTI both with MME and AMF. In the figure below, the 5G-TMSI and the M-TMSI are of equal length and allocated by AMF/MME. In addition to these, there's the MME Code and the AMF pointer and possibly part of AMF set ID.

### GUTI

| **PLMN-**I**D** | AMF | AMF Set ID | | AMF | 5G-TMSI |
|---|---|---|---|---|---|
| | **MMEGI** | | **MMEC** | | **M-TMSI** |
| | 16 bits | | 8 bits | | 32 bits |

The MME Code is most likely not contributing a lot to the contention resolution success as it is probably the same for very many UE's. From a contention success perspective, it is 5G-TMSI and M-TMSI that are important for msg3.

| | |
|---|---|
| **Proposal 2** | **5G-TMSI should be part of the 40 bits in msg3.** |

As the NG-RAN node (ng-eNB, gNB) does not have to route any information to the core network until after msg5, there is no particular need to include AMF information until in msg5. The NG-RAN node will not have any use of it anyway. However, for the sake of keeping it to 40 bits, we propose to follow one of the following proposals:
a) Include AMF Pointer + 4 least significant bits of AMF Set ID in msg3
b) Include 5G-TMSI + an 8-bit random value in msg3

Option b) above has the advantage that it will improve the contention resolution, whereas option a) has the advantage that there will be 8 less bits to transfer in msg5.

For the sake of not splitting already existing fields, and define new (partial) fields, we propose to follow b) above and add a random 8-bit sequence in addition to 5G-TMSI in msg3.

| | |
|---|---|
| **Proposal 3** | **Transmit a 32-bit 5G-TMSI + an 8-bit random sequence in msg3 to identify the UE for contention resolution purposes.** |
| **Proposal 4** | **Transmit the AMF pointer and the AMF Set ID in msg5** |

Some normal text (Body Text). Assign this style by pressing Alt-B

| | |
|---|---|
| **Proposal 5** | **A Proposal with automatic numbering. Assign this type by pressing Alt-P. A list of all Proposals can be found in the Conclusion section.** |
| **Observation 1** | **An Observation with automatic numbering. Assign this type by pressing Alt-O. A list of all Observations can be found in the Conclusion section.** |

### CONCLUSION

In section 0 we made the following observations:
Observation 1 An Observation with automatic numbering. Assign this type by pressing Alt-O. A list of all Observations can be found in the Conclusion section.
Observation 2 Another observation.

Based on the discussion in section 0 we propose the following:
Proposal 1 We propose to keep a 40-bit identifier in msg3, to avoid any need to change MAC CE for contention resolution.
Proposal 2 5G-TMSI should be part of the 40 bits in msg3.
Proposal 3 Transmit a 32-bit 5G-TMSI + an 8-bit random sequence in msg3 to identify the UE for contention resolution purposes.
Proposal 4 Transmit the AMF pointer and the AMF Set ID in msg5
Proposal 5 A Proposal with automatic numbering. Assign this type by pressing Alt-P. A list of all Proposals can be found in the Conclusion section.

### REFERENCES

[1] R2-1806475, Offline discussion report on [101#10][LTE/5GC] 5G-S-TMSI size in LTE connected to 5GC, 3GPP TSG-RAN WG2 #101Bis, Sanya, China, 16th - 20th April 2018
[2] S2-184501/R2-1806448, Reply LS on 5G-S-TMSI, SA WG2 Meeting #127, Sanya, China, 16 - 20 April, 2018
[3] S2-183160, 5GS Temporary Identifiers and mapping - solution proposal, Ericsson, SA WG2 Meeting #127, Sanya, China, 16 - 20 April, 2018
[4] R2-1804858, Impact from 48 bit 5G-S-TMSI (LTE and NR), 3GPP TSG-RAN WG2 #101-Bis, Sanya, P.R. of China, 16th - 20th April 2018

### ABBREVIATIONS

At least some of the following abbreviations may be used in this disclosure. If there is an inconsistency between abbreviations, preference should be given to how it is used above. If listed multiple times below, the first listing should be preferred over any subsequent listing(s).
- 1x RTT: CDMA2000 1x Radio Transmission Technology
- 3GPP: 3rd Generation Partnership Project
- 5G: 5th Generation
- ABS: Almost Blank Subframe
- ARQ: Automatic Repeat Request
- AWGN: Additive White Gaussian Noise
- BCCH: Broadcast Control Channel
- BCH: Broadcast Channel
- CA: Carrier Aggregation
- CC: Carrier Component
- CCCH SDU: Common Control Channel SDU
- CDMA: Code Division Multiplexing Access
- CGI: Cell Global Identifier
- CIR: Channel Impulse Response
- CP: Cyclic Prefix
- CPICH: Common Pilot Channel
- CPICH Ec/No: CPICH Received energy per chip divided by the power density in the band
- CQI: Channel Quality information
- C-RNTI: Cell RNTI
- CSI: Channel State Information
- DCCH: Dedicated Control Channel
- DL: Downlink
- DM: Demodulation
- DMRS: Demodulation Reference Signal
- DRX: Discontinuous Reception
- DTX: Discontinuous Transmission
- DTCH: Dedicated Traffic Channel
- DUT: Device Under Test
- E-CID: Enhanced Cell-ID (positioning method)
- E-SMLC: Evolved-Serving Mobile Location Centre
- ECGI: Evolved CGI
- eNB: E-UTRAN NodeB
- ePDCCH: enhanced Physical Downlink Control Channel
- E-SMLC: evolved Serving Mobile Location Center
- E-UTRA: Evolved UTRA
- E-UTRAN: Evolved UTRAN
- FDD: Frequency Division Duplex
- FFS: For Further Study
- GERAN: GSM EDGE Radio Access Network
- gNB: Base station in NR
- GNSS: Global Navigation Satellite System
- GSM: Global System for Mobile communication
- HARQ: Hybrid Automatic Repeat Request
- HO: Handover
- HSPA: High Speed Packet Access
- HRPD: High Rate Packet Data
- LOS: Line of Sight
- LPP: LTE Positioning Protocol
- LTE: Long-Term Evolution
- MAC: Medium Access Control
- MBMS: Multimedia Broadcast Multicast Services
- MBSFN: Multimedia Broadcast multicast service Single Frequency Network
- MBSFN ABS: MBSFN Almost Blank Subframe
- MDT: Minimization of Drive Tests
- MIB: Master Information Block
- MME: Mobility Management Entity
- MSC: Mobile Switching Center
- NPDCCH: Narrowband Physical Downlink Control Channel
- NR: New Radio
- OCNG: OFDMA Channel Noise Generator
- OFDM: Orthogonal Frequency Division Multiplexing
- OFDMA: Orthogonal Frequency Division Multiple Access
- OSS: Operations Support System
- OTDOA: Observed Time Difference of Arrival
- O&M: Operation and Maintenance
- PBCH: Physical Broadcast Channel
- P-CCPCH: Primary Common Control Physical Channel
- PCell: Primary Cell
- PCFICH: Physical Control Format Indicator Channel
- PDCCH: Physical Downlink Control Channel
- PDP: Profile Delay Profile
- PDSCH: Physical Downlink Shared Channel
- PGW: Packet Gateway
- PHICH: Physical Hybrid-ARQ Indicator Channel
- PLMN: Public Land Mobile Network
- PMI: Precoder Matrix Indicator
- PRACH: Physical Random Access Channel
- PRS: Positioning Reference Signal
- PSS: Primary Synchronization Signal
- PUCCH: Physical Uplink Control Channel
- PUSCH: Physical Uplink Shared Channel
- RACH: Random Access Channel
- QAM: Quadrature Amplitude Modulation
- RAN: Radio Access Network
- RAT: Radio Access Technology
- RLM: Radio Link Management
- RNC: Radio Network Controller
- RNTI: Radio Network Temporary Identifier
- RRC: Radio Resource Control
- RRM: Radio Resource Management
- RS: Reference Signal
- RSCP: Received Signal Code Power
- RSRP: Reference Symbol Received Power OR Reference Signal Received Power
- RSRQ: Reference Signal Received Quality OR Reference Symbol Received Quality
- RSSI: Received Signal Strength Indicator
- RSTD: Reference Signal Time Difference
- SCH: Synchronization Channel
- SCell: Secondary Cell
- SDU: Service Data Unit
- SFN: System Frame Number
- SGW: Serving Gateway
- SI: System Information
- SIB: System Information Block
- SNR: Signal to Noise Ratio
- SON: Self Optimized Network
- SS: Synchronization Signal
- SSS: Secondary Synchronization Signal
- TDD: Time Division Duplex
- TDOA: Time Difference of Arrival
- TOA: Time of Arrival
- TSS: Tertiary Synchronization Signal
- TTI: Transmission Time Interval
- UE: User Equipment
- UL: Uplink
- UMTS: Universal Mobile Telecommunication System
- USIM: Universal Subscriber Identity Module
- UTDOA: Uplink Time Difference of Arrival
- UTRA: Universal Terrestrial Radio Access
- UTRAN: Universal Terrestrial Radio Access Network
- WCDMA: Wide CDMA
- WLAN: Wide Local Area Network

## Claims

1. A method of operation of a wireless device (1010) in a wireless network (1006), the method comprising:
transmitting (425) a first message to a network node (1060), the first message comprising at least a first portion of an identifier associated with the wireless device and at least a first portion of an access and mobility management (AMF) identifier (ID), wherein the first message does not comprise a complete identifier associated with the wireless device; and
transmitting (425) a second message to the network node, the second message comprising a second portion of the identifier associated with the wireless device, and wherein the second message comprises the first portion and a second portion of the AMF ID.

2. The method of claim 1, wherein the first message comprises the first portion of the identifier associated with the wireless device and the first portion and the second portion of the AMF ID.

3. The method of any of the preceding claims, wherein transmitting the first message comprises transmitting a first predetermined number of bits of the identifier associated with the wireless device in the first message and wherein transmitting the second message comprises transmitting a second predetermined number of bits of the identifier associated with the wireless device in the second message.

4. The method of any of the preceding claims, further comprises splitting (420) the identifier associated with the wireless device between the first message and the second message in response to a length of the identifier associated with the wireless device exceeding a limit determined by received grants for transmission of the first message.

5. A wireless device (1010) configured to operate in a wireless network (1006), wherein the wireless device is adapted to:
transmit (425) a first message to a network node (1060), the first message comprising at least a first portion of an identifier associated with the wireless device and at least a first portion of an access and mobility management (AMF) identifier (ID), wherein the first message does not comprise a complete identifier associated with the wireless device; and
transmit (425) a second message to the network node, the second message comprising a second portion of the identifier associated with the wireless device, and wherein the second message comprises the first portion and a second portion of the AMF ID.

6. A computer program product comprising a non-transitory device readable storage medium including program code executable by processing circuitry (1020) of a wireless device (1010), whereby execution of the program code by the processing circuitry causes the wireless device to:
transmit (425) a first message to a network node (1060), the first message comprising at least a first portion of an identifier associated with the wireless device and at least a first portion of an access and mobility management (AMF) identifier (ID), wherein the first message does not comprise a complete identifier associated with the wireless device; and
transmit (425) a second message to the network node, the second message comprising a second portion of the identifier associated with the wireless device, and wherein the second message comprises the first portion and a second portion of the AMF ID.

7. A method of operating a network node (1060) in a wireless network (1006), the method comprising:
receiving (425) a first message from a wireless device (1010), the first message comprising at least a first portion of an identifier associated with the wireless device and at least a portion of an access and mobility management (AMF) identifier (ID), wherein the first message does not comprise a complete identifier associated with the wireless device; and
receiving (425) a second message from the wireless device (1010), the second message comprising a second portion of the identifier associated with the wireless device, and wherein the second message comprises the first portion and a second portion of the AMF ID.

8. The method of claim 7, wherein receiving the first message comprises receiving a first predetermined number of bits of the identifier associated with the wireless device in the first message and wherein receiving the second message comprises receiving a second predetermined number of bits of the identifier associated with the wireless device in the second message.

9. The method of any of claims 7-8, further comprises splitting (420) the identifier associated with the wireless device between the first message and the second message in response to a length of the identifier associated with the wireless device exceeding a limit that the network node is capable of receiving in the first message.

10. A network node (1060) configured to operate in a wireless network (1006), wherein the network node is adapted to:
receive a first message from a wireless device (1010), the first message comprising at least a first portion of an identifier associated with the wireless device and at least a first portion of an access and mobility management (AMF) identifier (ID), wherein the first message does not comprise a complete identifier associated with the wireless device; and
receive a second message from the wireless device (1010), the second message comprising a second portion of the identifier associated with the wireless device, and wherein the second message comprises the first portion and a second portion of the AMF ID.

11. A computer program product comprising a non-transitory device readable storage medium including program code executable by processing circuitry (1070) of a network node (1060), whereby execution of the program code by the processing circuitry causes the network node to:
receive (425) a first message from a wireless device, the first message comprising at least a first portion of an identifier associated with the wireless device and at least a first portion of an access and mobility management (AMF) identifier (ID), wherein the first message does not comprise a complete identifier associated with the wireless device; and
receive (425) a second message from the wireless device, the second message comprising a second portion of the identifier associated with the wireless device, and wherein the second message comprises the first portion and a second portion of the AMF ID.

## Patentansprüche

1. Betriebsverfahren für eine drahtlose Vorrichtung (1010) in einem drahtlosen Netzwerk (1006), wobei das Verfahren Folgendes umfasst:
Senden (425) einer ersten Nachricht an einen Netzwerkknoten (1060), wobei die erste Nachricht mindestens einen ersten Teil einer Kennung, die mit der drahtlosen Vorrichtung assoziiert ist, und mindestens einen ersten Teil einer Kennung (ID) einer Zugangs- und Mobilitätsverwaltung (AMF) umfasst, wobei die erste Nachricht keine vollständige mit der drahtlosen Vorrichtung assoziierte Kennung umfasst; und
Senden (425) einer zweiten Nachricht an den Netzwerkknoten, wobei die zweite Nachricht einen zweiten Teil der mit der drahtlosen Vorrichtung assoziierten Kennung umfasst und wobei die zweite Nachricht den ersten Teil und einen zweiten Teil der AMF-ID umfasst.

2. Verfahren nach Anspruch 1, wobei die erste Nachricht den ersten Teil der mit der drahtlosen Vorrichtung assoziierten Kennung und den ersten Teil und den zweiten Teil der AMF-ID umfasst.

3. Verfahren nach einem der vorhergehenden Ansprüche, wobei das Senden der ersten Nachricht Senden einer ersten vorbestimmten Anzahl von Bits der mit der drahtlosen Vorrichtung assoziierten Kennung in der ersten Nachricht umfasst und wobei das Senden der zweiten Nachricht Senden einer zweiten vorbestimmten Anzahl von Bits der mit der drahtlosen Vorrichtung assoziierten Kennung in der zweiten Nachricht umfasst.

4. Verfahren nach einem der vorhergehenden Ansprüche, ferner umfassend ein Aufteilen (420) der mit der drahtlosen Vorrichtung assoziierten Kennung zwischen der ersten und der zweiten Nachricht in Reaktion darauf, dass eine Länge der mit der drahtlosen Vorrichtung assoziierten Kennung eine Grenze überschreitet, die durch empfangene Freigaben für die Übertragung der ersten Nachricht bestimmt ist.

5. Drahtlose Vorrichtung (1010), die zum Betrieb in einem drahtlosen Netzwerk (1006) ausgelegt ist, wobei die drahtlose Vorrichtung zu Folgendem ausgelegt ist:
Senden (425) einer ersten Nachricht an einen Netzwerkknoten (1060), wobei die erste Nachricht mindestens einen ersten Teil einer Kennung, die mit der drahtlosen Vorrichtung assoziiert ist, und mindestens einen ersten Teil einer Kennung (ID) einer Zugangs- und Mobilitätsverwaltung (AMF) umfasst, wobei die erste Nachricht keine vollständige mit der drahtlosen Vorrichtung assoziierte Kennung umfasst; und
Senden (425) einer zweiten Nachricht an den Netzwerkknoten, wobei die zweite Nachricht einen zweiten Teil der mit der drahtlosen Vorrichtung assoziierten Kennung umfasst und wobei die zweite Nachricht den ersten Teil und einen zweiten Teil der AMF-ID umfasst.

6. Computerprogrammprodukt, umfassend ein nichtflüchtiges vorrichtungslesbares Speichermedium, das Programmcode umfasst, der von Verarbeitungsschaltungsanordnung (1020) einer drahtlosen Vorrichtung (1010) ausgeführt werden kann, wobei die Ausführung des Programmcodes durch die Verarbeitungsschaltungsanordnung die drahtlose Vorrichtung zu Folgendem veranlasst:
Senden (425) einer ersten Nachricht an einen Netzwerkknoten (1060), wobei die erste Nachricht mindestens einen ersten Teil einer Kennung, die mit der drahtlosen Vorrichtung assoziiert ist, und mindestens einen ersten Teil einer Kennung (ID) einer Zugangs- und Mobilitätsverwaltung (AMF) umfasst, wobei die erste Nachricht keine vollständige mit der drahtlosen Vorrichtung assoziierte Kennung umfasst; und
Senden (425) einer zweiten Nachricht an den Netzwerkknoten, wobei die zweite Nachricht einen zweiten Teil der mit der drahtlosen Vorrichtung assoziierten Kennung umfasst und wobei die zweite Nachricht den ersten Teil und einen zweiten Teil der AMF-ID umfasst.

7. Betriebsverfahren für einen Netzwerkknoten (1060) in einem drahtlosen Netzwerk (1006), wobei das Verfahren Folgendes umfasst:
Empfangen (425) einer ersten Nachricht von einer drahtlosen Vorrichtung (1010), wobei die erste Nachricht mindestens einen ersten Teil einer Kennung, die mit der drahtlosen Vorrichtung assoziiert ist, und mindestens einen Teil einer Kennung (ID) einer Zugangs- und Mobilitätsverwaltung (AMF) umfasst, wobei die erste Nachricht keine vollständige mit der drahtlosen Vorrichtung assoziierte Kennung umfasst; und
Empfangen (425) einer zweiten Nachricht von der drahtlosen Vorrichtung (1010), wobei die zweite Nachricht einen zweiten Teil der mit der drahtlosen Vorrichtung assoziierten Kennung umfasst und wobei die zweite Nachricht den ersten Teil und einen zweiten Teil der AMF-ID umfasst.

8. Verfahren nach Anspruch 7, wobei das Empfangen der ersten Nachricht Empfangen einer ersten vorbestimmten Anzahl von Bits der mit der drahtlosen Vorrichtung assoziierten Kennung in der ersten Nachricht umfasst und wobei das Empfangen der zweiten Nachricht Empfangen einer zweiten vorbestimmten Anzahl von Bits der mit der drahtlosen Vorrichtung assoziierten Kennung in der zweiten Nachricht umfasst.

9. Verfahren nach einem der Ansprüche 7 bis 8, ferner umfassend ein Aufteilen (420) der mit der drahtlosen Vorrichtung assoziierten Kennung zwischen der ersten und der zweiten Nachricht in Reaktion darauf, dass eine Länge der mit der drahtlosen Vorrichtung assoziierten Kennung eine Grenze überschreitet, die der Netzwerkknoten in der ersten Nachricht empfangen kann.

10. Netzwerkknoten (1060), der zum Betrieb in einem drahtlosen Netzwerk (1006) ausgelegt ist, wobei der Netzwerkknoten zu Folgendem ausgelegt ist:
Empfangen einer ersten Nachricht von einer drahtlosen Vorrichtung (1010), wobei die erste Nachricht mindestens einen ersten Teil einer Kennung, die mit der drahtlosen Vorrichtung assoziiert ist, und mindestens einen Teil einer Kennung (ID) einer Zugangs- und Mobilitätsverwaltung (AMF) umfasst, wobei die erste Nachricht keine vollständige mit der drahtlosen Vorrichtung assoziierte Kennung umfasst; und
Empfangen einer zweiten Nachricht von der drahtlosen Vorrichtung (1010), wobei die zweite Nachricht einen zweiten Teil der mit der drahtlosen Vorrichtung assoziierten Kennung umfasst und wobei die zweite Nachricht den ersten Teil und einen zweiten Teil der AMF-ID umfasst.

11. Computerprogrammprodukt, umfassend ein nichtflüchtiges vorrichtungslesbares Speichermedium, das Programmcode umfasst, der von Verarbeitungsschaltungsanordnung (1070) eines Netzwerkknotens (1060) ausgeführt werden kann, wobei die Ausführung des Programmcodes durch die Verarbeitungsschaltungsanordnung den Netzwerkknoten zu Folgendem veranlasst:
Empfangen (425) einer ersten Nachricht von einer drahtlosen Vorrichtung, wobei die erste Nachricht mindestens einen ersten Teil einer Kennung, die mit der drahtlosen Vorrichtung assoziiert ist, und mindestens einen Teil einer Kennung (ID) einer Zugangs- und Mobilitätsverwaltung (AMF) umfasst, wobei die erste Nachricht keine vollständige mit der drahtlosen Vorrichtung assoziierte Kennung umfasst; und
Empfangen (425) einer zweiten Nachricht von der drahtlosen Vorrichtung, wobei die zweite Nachricht einen zweiten Teil der mit der drahtlosen Vorrichtung assoziierten Kennung umfasst und wobei die zweite Nachricht den ersten Teil und einen zweiten Teil der AMF-ID umfasst.

## Revendications

1. Procédé de fonctionnement d'un dispositif sans fil (1010) dans un réseau sans fil (1006), le procédé comprenant :
la transmission (425) d'un premier message à un nœud de réseau (1060), le premier message comprenant au moins une première partie d'un identifiant associé au dispositif sans fil et au moins une première partie d'un identifiant (ID) de gestion d'accès et de mobilité (AMF), dans lequel le premier message ne comprend pas un identifiant complet associé au dispositif sans fil ; et
la transmission (425) d'un deuxième message au nœud de réseau, le deuxième message comprenant une deuxième partie de l'identifiant associé au dispositif sans fil, et dans lequel le deuxième message comprend la première partie et une deuxième partie de l'ID AMF.

2. Procédé selon la revendication 1, dans lequel le premier message comprend la première partie de l'identifiant associé au dispositif sans fil et la première partie et la deuxième partie de l'ID AMF.

3. Procédé selon l'une quelconque des revendications précédentes, dans lequel la transmission du premier message comprend la transmission d'un premier nombre prédéterminé de bits de l'identifiant associé au dispositif sans fil dans le premier message et dans lequel la transmission du deuxième message comprend la transmission d'un deuxième nombre prédéterminé de bits de l'identifiant associé au dispositif sans fil dans le deuxième message.

4. Procédé selon l'une quelconque des revendications précédentes, comprenant en outre la division (420) de l'identifiant associé au dispositif sans fil entre le premier message et le deuxième message en réponse au fait qu'une longueur de l'identifiant associé au dispositif sans fil dépasse une limite déterminée par des octrois reçus pour une transmission du premier message.

5. Dispositif sans fil (1010) configuré pour fonctionner dans un réseau sans fil (1006), dans lequel le dispositif sans fil est adapté pour :
transmettre (425) un premier message à un nœud de réseau (1060), le premier message comprenant au moins une première partie d'un identifiant associé au dispositif sans fil et au moins une première partie d'un identifiant (ID) de gestion d'accès et de mobilité (AMF), dans lequel le premier message ne comprend pas un identifiant complet associé au dispositif sans fil ; et
transmettre (425) un deuxième message au nœud de réseau, le deuxième message comprenant une deuxième partie de l'identifiant associé au dispositif sans fil, et dans lequel le deuxième message comprend la première partie et une deuxième partie de l'ID AMF.

6. Produit programme informatique comprenant un support de stockage non transitoire lisible par dispositif incluant un code de programme exécutable par une circuiterie de traitement (1020) d'un dispositif sans fil (1010), selon lequel une exécution du code de programme par la circuiterie de traitement amène le dispositif sans fil à :
transmettre (425) un premier message à un nœud de réseau (1060), le premier message comprenant au moins une première partie d'un identifiant associé au dispositif sans fil et au moins une première partie d'un identifiant (ID) de gestion d'accès et de mobilité (AMF), dans lequel le premier message ne comprend pas un identifiant complet associé au dispositif sans fil ; et
transmettre (425) un deuxième message au nœud de réseau, le deuxième message comprenant une deuxième partie de l'identifiant associé au dispositif sans fil, et dans lequel le deuxième message comprend la première partie et une deuxième partie de l'ID AMF.

7. Procédé de fonctionnement d'un nœud de réseau (1060) dans un réseau sans fil (1006), le procédé comprenant :
la réception (425) d'un premier message depuis un dispositif sans fil (1010), le premier message comprenant au moins une première partie d'un identifiant associé au dispositif sans fil et au moins une partie d'un identifiant (ID) de gestion d'accès et de mobilité (AMF), dans lequel le premier message ne comprend pas un identifiant complet associé au dispositif sans fil ; et
la réception (425) d'un deuxième message depuis le dispositif sans fil (1010), le deuxième message comprenant une deuxième partie de l'identifiant associé au dispositif sans fil, et dans lequel le deuxième message comprend la première partie et une deuxième partie de l'ID AMF.

8. Procédé selon la revendication 7, dans lequel la réception du premier message comprend la réception d'un premier nombre prédéterminé de bits de l'identifiant associé au dispositif sans fil dans le premier message et dans lequel la réception du deuxième message comprend la réception d'un deuxième nombre prédéterminé de bits de l'identifiant associé au dispositif sans fil dans le deuxième message.

9. Procédé selon la revendication 7 ou 8, comprenant en outre la division (420) de l'identifiant associé au dispositif sans fil entre le premier message et le deuxième message en réponse au fait qu'une longueur de l'identifiant associé au dispositif sans fil dépasse une limite que le nœud de réseau est capable de recevoir dans le premier message.

10. Nœud de réseau (1060) configuré pour fonctionner dans un réseau sans fil (1006), dans lequel le nœud de réseau est adapté pour :
recevoir un premier message depuis un dispositif sans fil (1010), le premier message comprenant au moins une première partie d'un identifiant associé au dispositif sans fil et au moins une première partie d'un identifiant (ID) de gestion d'accès et de mobilité (AMF), dans lequel le premier message ne comprend pas un identifiant complet associé au dispositif sans fil ; et
recevoir un deuxième message depuis le dispositif sans fil (1010), le deuxième message comprenant une deuxième partie de l'identifiant associé au dispositif sans fil, et dans lequel le deuxième message comprend la première partie et une deuxième partie de l'ID AMF.

11. Produit programme informatique comprenant un support de stockage non transitoire lisible par dispositif incluant un code de programme exécutable par une circuiterie de traitement (1070) d'un nœud de réseau (1060), selon lequel une exécution du code de programme par la circuiterie de traitement amène le nœud de réseau à :
recevoir (425) un premier message depuis un dispositif sans fil, le premier message comprenant au moins une première partie d'un identifiant associé au dispositif sans fil et au moins une première partie d'un identifiant (ID) de gestion d'accès et de mobilité (AMF), dans lequel le premier message ne comprend pas un identifiant complet associé au dispositif sans fil ; et
recevoir (425) un deuxième message depuis le dispositif sans fil, le deuxième message comprenant une deuxième partie de l'identifiant associé au dispositif sans fil, et dans lequel le deuxième message comprend la première partie et une deuxième partie de l'ID AMF.
